# EUROPEAN PATENT APPLICATION

(11) **EP 4 095 337 A1**
(43) Date of publication of application: **30.11.2022**
(21) Application number: 21744444.7
(22) Date of filing: 25.01.2021
(51) Int. Cl.: E05B 19/00, E05B 49/00, G06Q 50/12

(54) **ELECTRONIC LOCK SYSTEM, METHOD PERFORMED USING ELECTRONIC LOCK SYSTEM, PORTABLE TERMINAL, METHOD PERFORMED USING PORTABLE TERMINAL, AND COMPUTER PROGRAM**

(30) Priority: 24.01.2020 JP 2020009873
(71) Applicant: Roseraie Corporation, Tokyo 103-0023 (JP)
(72) Inventor: OBATA, Akiyo, Tokyo 103-0023 (JP)
(74) Representative: Gill Jennings & Every LLP
(86) International application number: PCT/JP2021/002411
(87) International publication number: WO 2021/149831

(57) **Abstract**

To suppress costs when an electronic lock is used, when key information held by an electronic lock and a server is "K//n" ("n" is an integer), key information "K//n" and new key information "K//n+1" are supplied from a server (200) to a portable terminal of a user who wants to unlock the electronic lock. The key information and new key information are transferred from the portable terminal to the electronic lock, and when the key information transferred from the portable terminal to the electronic lock matches the key information recorded in the electronic lock, the electronic lock is unlocked. When the key information expires, the key information recorded in both the electronic lock and the server are overwritten with "K//n+1."

## Description

### Technical Field

The present invention relates to an electronic lock system which includes an electronic lock.

### Background Art

Electronic locks have been widespread for a long time. In the present invention, unlike a classical lock that is unlocked by a physical key that is a tangible object, a lock which is unlocked by electronic data (including a signal, but in the present application, such a signal is referred to as "key information") transferred wirelessly or by another method is defined as an "electronic lock." The unlocking of the electronic lock is required to be performed by using electronic data, but it is not required that the locking of the electronic lock be performed by using electronic data. For example, even cases in which an electronic lock automatically locks when the door to which the electronic lock is attached closes may be included in the definition of "electronic lock."

There are various reasons for the spread of electronic locks.

First, one reason is that, unlike a physical key that is a tangible object, an electronic lock does not require a physical key that is a tangible object. Moreover, key information, which is intangible, can be transmitted from an administrator of the electronic lock to a user who desires to unlock the electronic lock via the widely-spread Internet or another network, for example, and thus it is extremely easy to transfer the key information corresponding to the physical key from the administrator of the electronic lock to the user.

Another reason is that it is extremely easy to change intangible key information, and hence, although it is required to register the key information on the electronic lock side and change the key information regarded as a valid key when the key information is received by the electronic lock, it is possible to change the key information to be passed from the administrator of the electronic lock to the user each time, and the security of such an operation is high.

Therefore, for example, when there are frequent occasions of transferring keys to users and it is required that many users unlock one lock, such as for the doors of accommodation facilities and locker doors, electronic locks demonstrate their effectiveness.

### Summary of Invention

### Technical Problem

However, electronic locks also have problems.

As described above, when many users share one electronic lock, from a security point of view, the administrator of the electronic lock is required to provide new key information to the users each time a different user unlocks the electronic lock. This in itself is easy because intangible key information can be easily transmitted by using a network. Currently, many of the people who become users unlocking electronic locks often hold devices that can communicate via networks, such as smartphones, cell phones, and tablet computers, and hence there is little difficulty in delivering the key information to the users.

Meanwhile, as described above, in order to use different key information each time a different user unlocks the electronic lock, it is required to change the key information regarded as the valid key when the key information is received by the electronic lock. This issue can be solved at least in principle by enabling a device which manages the electronic lock and the electronic lock to communicate to and from each other via the Internet, another network, or a dedicated line, and transmitting the key information from the device which manages the electronic lock to the electronic lock. However, this solution merely enables the issue to be solved in principle.

This is because, in order to cause the electronic lock to perform the above-mentioned communication, it is required to incorporate a mechanism for performing communication in the electronic lock, which is costly, and because when the communication is performed by the electronic lock in a wired-manner, costs are incurred for the wiring as well. Further, in a case in which the electronic lock is to communicate, this means that the electronic lock requires power, and in that case, wiring is required in order to supply power to the electronic lock. As a matter of course, it is conceivable to supply power to the electronic lock by a dry-cell battery or another battery, but in that case, when the battery runs out, the electronic lock becomes unusable, or the costs are incurred for replacing the battery. The power required for communication is relatively large, and hence the battery tends to be replaced frequently when communication is performed based on a mechanism of an electronic lock.

The increase in costs as described above becomes a major obstacle to the retrofitting of electronic locks to existing accommodation facilities and lockers.

It is an object of the present invention to suppress costs when an electronic lock is used.

### Solution to Problem

In order to solve the above-mentioned problems, the inventor of the present application conducted research and development. As a result, the following knowledge was obtained.

As described above, currently, many people hold portable terminals that can communicate via a network. In a related-art electronic lock, the communication function that the portable terminal has is used only when key information is distributed to the user, and the communication function unique to the electronic lock that the electronic lock has is used when key information is distributed to the electronic lock.

The communication function unique to the electronic lock that the electronic lock has increases the cost of the electronic lock. But by using the communication function of the portable terminal to transmit new key information to the electronic lock, it may be possible to suppress the cost of the electronic lock.

The present invention is based on such knowledge.

The present invention is as follows.

According to one embodiment of the present invention, there is provided an electronic lock system including: a plurality of electronic locks each including: a lock mechanism configured to be alternatively in an unlocked state or a locked state; a lock controller having a function of executing unlocking processing of switching the lock mechanism in the locked state to the unlocked state; a lock receiver configured to receive key information from outside, the key information being information different from information received from a previous user, the receiving of the key information acting as a trigger for the lock controller to execute the unlocking processing; and a lock recorder configured to record the key information, the lock controller being configured to execute the unlocking processing when the key information received by the lock receiver matches the key information recorded in the lock recorder, each of the plurality of electronic locks having a lock identifier assigned thereto, the lock identifier being a unique identifier for distinguishing the plurality of electronic locks from each other; and a server including: a key information generator configured to generate the key information to be supplied to the lock controller of each of the plurality of electronic locks; a server controller configured to control the key information generator; a server recorder configured to record a key generated by the key information generator; and a server communicator configured to perform wireless communication via a predetermined network.

Further, the electronic lock system is configured to be used in combination with a portable terminal held by a user, the portable terminal including: a terminal communicator configured to perform wireless communication to and from the server via the predetermined network; a terminal transfer module configured to transfer the key information to the lock receiver of one of the plurality of electronic locks; and a terminal input module for inputting the lock identifier of the one of the plurality of electronic locks.

Further, in the electronic lock system of the present invention, the server recorder of the server is configured to record the key information recorded at a current point in time in the lock recorder of each of the plurality of electronic locks under a state of being linked to the lock identifier of the each of the plurality of electronic locks including the lock recorder in which the key information is recorded, the server controller of the server is configured to, when a user who desires to unlock the lock mechanism of a specific electronic lock, which is one of the plurality of electronic locks, inputs the lock identifier of the specific electronic lock from the terminal input module of the portable terminal of the user and the server communicator receives the lock identifier of the specific electronic lock transmitted from the terminal communicator via the predetermined network, cause the key information generator to generate new key information, which is the key information to be recorded next in the lock recorder of the specific electronic lock, receive the generated new key information from the key information generator, read out the key information linked to the lock identifier of the specific electronic lock from the server recorder, overwrite the read key information with the new key information, and transmit the key information and the new key information from the server communicator to the portable terminal which has transmitted the lock identifier of the specific electronic lock via the predetermined network, and the lock controller of the specific electronic lock is configured to execute the unlocking processing when, of the key information and the new key information received by the terminal communicator and transferred from the portable terminal to the lock receiver via the terminal transfer module, the key information matches the key information recorded in the lock recorder, and overwrite the key information recorded in the lock recorder with the new key information.

The electronic lock system according to the present invention includes the server and the plurality of electronic locks. The server corresponds to the "device which manages the electronic lock" described in the section "Technical Problem."

The electronic lock system is used in combination with the portable terminal held by the user.

Each electronic lock included in the electronic lock system includes the lock mechanism which is alternatively in an unlocked state or a locked state, the lock controller having a function of executing unlocking processing of switching the lock mechanism in the locked state to the unlocked state, the lock receiver configured to receive key information from outside, the key information being information different from information received from a previous user, the receiving of the key information acting as a trigger for the lock controller to execute the unlocking processing, and the lock recorder configured to record the key information. The lock controller of each electronic lock is configured to execute the unlocking processing when the key information received by the lock receiver matches the key information recorded in the lock recorder. The unlocking mechanism of the electronic lock is basically the same as that of a related-art electronic lock. That is, when the key information received from the user is the same as the valid key information recorded in the lock recorder, the lock controller changes the lock mechanism from a locked state to an unlocked state. The lock identifier, which is a unique identifier, is assigned to each of the plurality of electronic locks. This in itself is a conventional technology for a server to manage a plurality of electronic locks.

Meanwhile, the server included in the electronic lock system includes the key information generator configured to generate the key information to be supplied to the lock controller of each of the plurality of electronic locks, the server controller configured to control the key information generator, the server recorder configured to record a key generated by the key information generator, and the server communicator configured to perform wireless communication via a predetermined network. The key information generator generates the key information to be supplied to each of the electronic locks. As a matter of course, when the user desires to unlock one of the electronic locks, the key information is also supplied to the portable terminal held by the user. The server recorder of the server records the key information recorded at the current point in time in the lock recorder of each electronic lock under a state of being linked to the lock identifier of the electronic lock including the lock recorder in which the key information is recorded. It is to be noted that, to be exact, there may be a time period in which the condition "key information recorded at the current point in time in the lock recorder of the electronic lock" is not satisfied for a short time before and after the processing of overwriting the key information with the new key information in the specific electronic lock (described later), but this point is ignored in the present application.

The portable terminal held by the user to be used in combination with the electronic lock system includes the terminal communicator configured to perform wireless communication to and from the server via the network, the terminal transfer module configured to transfer the key information to the lock receiver of the electronic lock, and the terminal input module for inputting the lock identifier of the electronic lock. The portable terminal uses the terminal communicator to perform wireless communication to and from the server via, for example, the Internet as the network. In the wireless communication, for example, the key information is transmitted from the server to the portable terminal. In the related art, the key information for unlocking the electronic lock is transmitted by this wireless communication from the server to the portable terminal and then transferred from the portable terminal to the electronic lock. In the present invention, the key information is transmitted from the server to the portable terminal, and as described later, another piece of key information which is not the key information for unlocking the electronic lock by transferring this key information from the portable terminal to the electronic lock is also transmitted from the server to the portable terminal. The terminal transfer module is for transferring the key information to the lock receiver of the electronic lock. In the present invention, there are two pieces of key information transferred from the portable terminal to the electronic lock by the terminal transfer module. One piece is key information like that in the related art, which is transferred to the electronic lock so that the user holding the portable terminal may unlock the electronic lock, and the other piece is a different piece of key information.

The server included in the electronic lock system according to the present invention is configured to receive, by the server communicator, the lock identifier of a specific electronic lock, which is one of the plurality of electronic locks, input by a user who desires to unlock the lock mechanism of the specific electronic lock from the terminal input module of the portable terminal of the user, and transmitted from the terminal communicator via the network. That is, the lock identifier assigned to each electronic lock can be input from the terminal input module to the portable terminal, and further, the portable terminal can transmit the input lock identifier to the server via the network.

Moreover, when the server controller of the server receives the lock identifier transmitted from the portable terminal, the server controller reads out, of the key information recorded in the lock recorder, the key information linked to the received lock identifier of the specific electronic lock from the server recorder. This key information is the key information required to unlock the specific electronic lock identified by the lock identifier, and hence this key information is transmitted from the server to the portable terminal. As described above, in the server recorder, the same key information as the key information recorded at the current point in time in the lock recorder of each electronic lock is recorded under a state of being linked to the lock identifier of each electronic lock, and thus the key information read out from the server recorder and transmitted from the server to the portable terminal always matches the key information recorded in the lock recorder of the specific electronic lock. Therefore, when the key information transmitted from the server to the portable terminal is transferred from the portable terminal to the electronic lock, the key information transferred from the portable terminal to the specific electronic lock always matches the key information recorded in the lock recorder of the specific electronic lock, and thus the electronic lock is unlocked.

Meanwhile, when the lock identifier is transmitted from the portable terminal, the server controller of the server is configured to cause the key information generator to generate new key information, which is key information to be recorded next in the lock recorder of the specific electronic lock that has transmitted the lock identifier, and receive the generated new key information from the key information generator. The new key information is the above-mentioned "separate key information." The new key information is transmitted from the server to the portable terminal together with the above-mentioned key information to be used to unlock the specific electronic lock. In addition, when the server controller of the server receives the new key information, the server controller of the server overwrites the original key information, that is, the key information linked to the lock identifier of the specific electronic lock read out as described above, with the new key information.

As described above, the key information transmitted from the server to the portable terminal is transferred from the portable terminal to the specific electronic lock, and the lock controller which has received the key information changes the lock mechanism from a locked state to an unlocked state. Only key information is used by the specific electronic lock to unlock the lock mechanism. Meanwhile, in the present invention, the new key information transmitted from the server to the portable terminal is also transferred from the portable terminal to the specific electronic lock in the same manner as the key information. The new key information is used by the lock controller in the specific electronic lock to overwrite the key information recorded in the lock recorder.

In other words, it can be said that the present invention focuses on the fact that there exists a route of "server -> portable terminal -> electronic lock" for transmitting the key information when the electronic lock selected as the specific electronic lock is to be unlocked, and uses the same route as the originally existing route as the route for transmitting new key information. Consequently, according to the present invention, it is possible to suppress costs when an electronic lock is used.

In the present invention, when focusing on the specific electronic lock, the key information (new key information) recorded in the lock recorder included in the specific electronic lock after unlocking is finished matches the key information (new key information) recorded in the server recorder included in the server in association with the lock identifier of the electronic lock that is the specific electronic lock. This state is the same as the state before the certain electronic lock selected by the user as the specific electronic lock is selected as the specific electronic lock. In other words, after this state has occurred, when an electronic lock is next selected as the specific electronic lock by the same user or another user, the specific electronic lock can be unlocked by repeating the same processing as described above. Further, in that case, the server and the specific electronic lock have the same new key information (next key information).

In addition, in the electronic lock system of the present invention, the same electronic lock may be repeatedly unlocked by the same user a plurality of times. For example, in a case in which the electronic lock is the electronic lock for a specific room in a certain hotel, during the period from when the user checks in to the room until the user checks out, the user is required to repeatedly unlock the electronic lock that is in a locked state. For example, in a case in which the check-in time of the user for the hotel room is 15:00 on a certain day and the check-out time is 12:00 on the next day, a problem occurs if the electronic lock of the checked-in room cannot be repeatedly unlocked by the user during the time period from the check-in time to the check-out time.

There are two ways to handle the key information in that case.

The first way is a method in which, even when the same user repeatedly unlocks the same electronic lock, different key information is supplied from the server to the portable terminal held by the same user each time the user unlocks the same electronic lock. This method can be described within the description of the method executed by the electronic lock system described above. In this case, the user trying to unlock the same electronic lock a plurality of times transmits the lock identifier of the electronic lock (specified electronic lock) that the user is trying to unlock from the portable terminal possessed by the user to the server each time the user tries to unlock the electronic lock, and as described above, the portable terminal receives the key information and new key information transmitted from the server. The key information and the new key information are transmitted from the portable terminal to the electronic lock, and the key information transmitted from the portable terminal to the electronic lock matches the key information recorded in the lock recorder of the specific electronic lock. As a result, the lock mechanism of the electronic lock becomes unlocked. Meanwhile, the new key information transmitted together with the key information to the electronic lock via the portable terminal immediately overwrites the key information in the lock recorder of the electronic lock.

Simply stated, this first method can be said as a method of using the key information as a key that can unlock the electronic lock only once.

Next, the second way is a method in which, when the same user repeatedly unlocks the same electronic lock, the same key information transferred from the portable terminal to the lock device is used as the key information for unlocking the lock mechanism of the electronic lock, and different key information is not supplied from the server to the portable terminal each time the electronic lock is unlocked. In this case, a user trying to initially (for the first time) unlock a certain electronic lock transmits the lock identifier of the electronic lock (specific electronic lock) that the user is trying to unlock in the same manner as described above, and receives the key information and new key information transmitted from the server on his or her portable terminal. The key information and the new key information are transmitted from the portable terminal to the electronic lock, and the key information transmitted from the portable terminal to the electronic lock matches the key information recorded in the lock recorder of the specific electronic lock. As a result, as with the case of the first method, the lock mechanism of the electronic lock becomes unlocked. Meanwhile, the new key information transmitted together with the key information to the electronic lock via the portable terminal does not immediately overwrite the key information in the lock recorder of the electronic lock. For example, as described above, in a case in which the electronic lock is the lock of a hotel room, and the user has the right to use the room from 15:00 on December 1, 2020, to 12:00 on the next day, that is, on December 2, in the lock recorder of the electronic lock, the key information is overwritten with the new key information in the lock recorder of the electronic lock at 12:00 on December 2, 2020 (or, for example, when the user expresses an intention to end usage (to check out) of the hotel room at an earlier point in time, at this point in time). In that case, when the electronic lock is unlocked for the second and subsequent times, the key information transmitted from the server to the portable terminal when the electronic lock is initially unlocked is repeatedly used. The portable terminal receives the key information and the new key information from the server when the electronic lock is initially unlocked. Therefore, this enables without involving any technical difficulties to record the key information from that information in the portable terminal, and transfer the recorded key information from the portable terminal to the electronic lock each time the user desires to unlock the electronic lock. As described above, the key information is not overwritten with the new key information and is maintained during the time range in which the user is to use the hotel room. Therefore, the key information transmitted from the portable terminal is always the same as the key information recorded in the recorder of the electronic lock during the time range. In other words, by transferring the key information recorded in the portable terminal to the electronic lock, the user can repeatedly unlock the electronic lock within a certain time range without receiving new key information from the server.

Simply stated, the second method can be said as a method of using the key information as a key capable of unlocking an electronic lock not just once, but a plurality of times, for example, an unlimited number of times, within a certain time range (valid period). In order to execute the second method, it is required that the electronic lock can grasp the above-mentioned "time range" (in the above-mentioned example, "from 15:00 on December 1, 2020, to 12:00 on the next day, that is, on December 2)" in which certain key information is recognized as valid. In order to grasp this time range, the electronic lock is required to obtain the information for identifying the time range from somewhere. The information can, for example, be transmitted from the server to the portable terminal and further from the portable terminal to the electronic lock. The transfer of the information for identifying the time range from the portable terminal to the electronic lock can be performed, for example, together with the transfer of the key information and the new key information. When the time range is set as described above, usually, a "reservation" procedure occurs in order for the server administrator to give the user the right to occupy the room within that time range. In such a case, the server administrator is likely to know the above-mentioned time range information, and hence, in order to supply the time range information from the portable terminal to the electronic lock, it is theoretically possible that the server administrator supply the time range information to the portable terminal. As a measure on the electronic lock side for establishing this mechanism, the electronic lock may have a clock to keep track of the current date and time.

In addition to the above, as the second method, in order to enable the same user to repeatedly unlock the same electronic lock, it is also possible to determine in advance the number of times (a limited number of times) the electronic lock can be unlocked by certain key information instead of defining the valid time range (valid period) of certain key information by the electronic lock. In this case, for the first time the electronic lock is unlocked, the unlocking is performed in the same manner as the case described above in which a valid period is defined for the key information, and the key information and the new key information are transferred to the electronic lock during the processing of unlocking the electronic lock for the first time. In the case of determining a limited number of times that certain key information is valid, the key information recorded in the lock recorder of the electronic lock is overwritten with the new key information at the same time as or after the electronic lock is unlocked by the number of times that the electronic lock can be unlocked (for example, in a case in which the number of times that a certain electronic lock can be unlocked by certain key information is two times, when that electronic lock is unlocked by the key information two times). In this case, when the number of times the electronic lock is unlocked is variable, it is required to transfer information for identifying that number of times from the portable terminal to the electronic lock, but when that number is fixed, by setting that "number of times" in advance in the electronic lock, it is not required to transfer information for identifying the number of times from the portable terminal to the electronic lock. At most, the electronic lock requires a counter for counting how many times the electronic lock has been unlocked by the same key information.

As described above, in the electronic lock system of the present invention, as the initial processing for a user to unlock an electronic lock (specific electronic lock), it is required that the user input the lock identifier of the specific electronic lock to the portable terminal from the terminal input module, and that the lock identifier be transmitted from the portable terminal to the server. To enable this, a unique lock identifier is assigned to each electronic lock. Any lock identifier may be used as long as each electronic lock can be identified. For example, when the electronic lock is for a hotel room, the lock identifier may be "AA hotel, BB station front, main building, room 516." In that case, the user can input the lock identifier to the portable terminal by inputting each piece of information (or encoded information of) "AA hotel," "BB station front," "main building," and "room 516" to the portable terminal. In that case, the terminal input module may be an input device for the user to input text. Further, there is a high likelihood of manual input by the user causing errors, and hence the lock identifier may be input to the portable terminal by, for example, the user selecting the lock identifier from a pull-down menu displayed on the display of the portable terminal by using the browser or a dedicated app of the portable terminal.

Meanwhile, as described above, the lock identifier of each key is fixed, and hence the lock identifier may be input to the portable terminal by arranging a first two-dimensional code corresponding to the lock identifier, which is a two-dimensional code readable by the terminal input module of the portable terminal, on or near the electronic lock and reading the two-dimensional code by the terminal input module of the portable terminal. For example, the first two-dimensional code can be a sticker printed with a two-dimensional code which includes information corresponding to the lock identifier. With this configuration, it is easy to arrange the first two-dimensional code on or near the electronic lock. The use of the first two-dimensional code reduces the possibility of the user making a mistake when inputting the lock identifier to the portable terminal. In this case, the terminal input module included in the portable terminal is implemented by a two-dimensional code reader that is originally included in the portable terminal or that can be included in the portable terminal by the portable terminal installing a predetermined computer program on the portable terminal ("app," which may or may not be the computer program according to the present invention).

The first two-dimensional code may, as a matter of course, include information other than information on the lock identifier.

The portable terminal includes the terminal transfer module, and the electronic lock includes the lock receiver. In the present invention, key information and new key information are transferred from the terminal transfer module to the lock receiver, and thus the terminal transfer module and the lock receiver are required in the portable terminal and the electronic lock, respectively. The terminal transfer module used for the transfer of the key information and the new key information and the electronic lock may be configured in any way as long as the transfer of the key information and the new key information can be achieved.

For example, the terminal transfer module may be a display configured to display a second two-dimensional code, which is a two-dimensional code including the key information and information corresponding to the new key information, and the lock receiver may be a reading device configured to read the second two-dimensional code. In this case, the user is required to display the second two-dimensional code on the display of the portable terminal and hold the second two-dimensional code in front of the reading device serving as the lock receiver, but unlike the wireless communication described later, there is little risk of communication failure due to differences in standards.

The terminal transfer module may be configured to wirelessly transmit the key information and the new key information, and the lock receiver may be configured to wirelessly receive the key information and the new key information from the terminal transfer module. In this case, the burden on the user is small because the user is not required to spend much time and effort to transfer the key information and the new key information, and in some cases, the transmission can be performed without the user even being involved in the transmission of the key information and the new key information, which have been transmitted from the server, from the portable terminal to the electronic lock. However, the communication between the terminal transfer module and the lock receiver may be implemented by, for example, standardized communication such as Bluetooth (trademark), but particularly when the portable terminal used by the user is a product having specifications for a country different from the country in which the electronic lock is installed, there is a possibility that the communication may not be established due to minor differences in standards, for example.

In both of the two methods described above, in addition to the key information and the new key information, the "information for identifying the time range" and other information may be transferred from the portable terminal to the electronic lock. Basically, it is convenient to transfer those pieces of information all at once. For example, the key information, the new key information, the "information for identifying the time range," and other information can be included in the second two-dimensional code.

The inventor of the present application also proposes a method to be executed by an electronic lock system as a mode of the present invention. The effects of that method are the same as those of the electronic lock system described above.

As an example, there is provided a method to be executed by an electronic lock system, the electronic lock system including: a plurality of electronic locks each including: a lock mechanism configured to be alternatively in an unlocked state or a locked state; a lock controller having a function of executing unlocking processing of switching the lock mechanism in the locked state to the unlocked state; a lock receiver configured to receive key information from outside, the key information being information different from information received from a previous user, the receiving of the key information acting as a trigger for the lock controller to execute the unlocking processing; and a lock recorder configured to record the key information, the lock controller being configured to execute the unlocking processing when the key information received by the lock receiver matches the key information recorded in the lock recorder, each of the plurality of electronic locks having a lock identifier assigned thereto, the lock identifier being a unique identifier for distinguishing the plurality of electronic locks from each other; and a server including: a key information generator configured to generate the key information to be supplied to the lock controller of each of the plurality of electronic locks; a server controller configured to control the key information generator; a server recorder configured to record a key generated by the key information generator; and a server communicator configured to perform wireless communication via a predetermined network, the electronic lock system being configured to be used in combination with a portable terminal held by a user, the portable terminal including: a terminal communicator configured to perform wireless communication to and from the server via the predetermined network; a terminal transfer module configured to transfer the key information to the lock receiver of one of the plurality of electronic locks; and a terminal input module for inputting the lock identifier of the one of the plurality of electronic locks.

Further, the method includes the steps of: recording, by the server recorder of the server, the key information recorded at a current point in time in the lock recorder of each of the plurality of electronic locks under a state of being linked to the lock identifier of the each of the plurality of electronic locks including the lock recorder in which the key information is recorded; causing, by the server controller of the server, when a user who desires to unlock the lock mechanism of a specific electronic lock, which is one of the plurality of electronic locks, inputs the lock identifier of the specific electronic lock from the terminal input module of the portable terminal of the user and the server communicator receives the lock identifier of the specific electronic lock transmitted from the terminal communicator via the predetermined network, the key information generator to generate new key information, which is the key information to be recorded next in the lock recorder of the specific electronic lock, receiving the generated new key information from the key information generator, reading out the key information linked to the lock identifier of the specific electronic lock from the server recorder, overwriting the read key information with the new key information, and transmitting the key information and the new key information from the server communicator to the portable terminal which has transmitted the lock identifier of the specific electronic lock via the predetermined network; and executing, by the lock controller of the specific electronic lock, the unlocking processing when, of the key information and the new key information received by the terminal communicator and transferred from the portable terminal to the lock receiver via the terminal transfer module, the key information matches the key information recorded in the lock recorder, and overwriting the key information recorded in the lock recorder with the new key information.

The inventor of the present application also proposes a computer program for causing a predetermined computer to function as a server in an electronic lock system as a mode of the present invention. The effects of the computer program are the same as the effects of the electronic lock system described above, and the fact that it becomes possible for, for example, a general-purpose computer to function as the server in the electronic lock system is also an effect of such a computer program.

As an example, there is provided a computer program for causing a predetermined computer to function as a server of an electronic lock system, the electronic lock system including: a plurality of electronic locks each including: a lock mechanism configured to be alternatively in an unlocked state or a locked state; a lock controller having a function of executing unlocking processing of switching the lock mechanism in the locked state to the unlocked state; a lock receiver configured to receive key information from outside, the key information being information different from information received from a previous user , the receiving of the key information acting as a trigger for the lock controller to execute the unlocking processing; and a lock recorder configured to record the key information, the lock controller being configured to execute the unlocking processing when the key information received by the lock receiver matches the key information recorded in the lock recorder, each of the plurality of electronic locks having a lock identifier assigned thereto, the lock identifier being a unique identifier for distinguishing the plurality of electronic locks from each other; and the server including: a key information generator configured to generate the key information to be supplied to the lock controller of each of the plurality of electronic locks; a server controller configured to control the key information generator; a server recorder configured to record a key generated by the key information generator; and a server communicator configured to perform wireless communication via a predetermined network, the electronic lock system being configured to be used in combination with a portable terminal held by a user, the portable terminal including: a terminal communicator configured to perform wireless communication to and from the server via the predetermined network; a terminal transfer module configured to transfer the key information to the lock receiver of one of the plurality of electronic locks; and a terminal input module for inputting the lock identifier of the one of the plurality of electronic locks.

Further, the computer program is a computer program for causing the server to execute the steps of: recording, by the server recorder of the server, the key information recorded at a current point in time in the lock recorder of each of the plurality of electronic locks under a state of being linked to the lock identifier of the each of the plurality of electronic locks including the lock recorder in which the key information is recorded; and causing, by the server controller of the server, when a user who desires to unlock the lock mechanism of a specific electronic lock, which is one of the plurality of electronic locks, inputs the lock identifier of the specific electronic lock from the terminal input module of the portable terminal of the user and the server communicator receives the lock identifier of the specific electronic lock transmitted from the terminal communicator via the predetermined network, the key information generator to generate new key information, which is the key information to be recorded next in the lock recorder of the specific electronic lock, receiving the generated new key information from the key information generator, reading out the key information linked to the lock identifier of the specific electronic lock from the server recorder, overwriting the read key information with the new key information, and transmitting the key information and the new key information from the server communicator to the portable terminal which has transmitted the lock identifier of the specific electronic lock via the predetermined network.

After the server executes the step of transmitting the key and the new key information from the server communicator to the portable terminal which has transmitted the lock identifier of the specific electronic lock via the predetermined network, the following processing is executable in the electronic lock: the lock controller of the specific electronic lock executes the unlocking processing when, of the key information and the new key information received by the terminal communicator and transferred from the portable terminal to the lock receiver via the terminal transfer module, the key information matches the key information recorded in the lock recorder, and overwrites the key information recorded in the lock recorder with the new key information.

The inventor of the present application also proposes a portable terminal to be used in combination with an electronic lock system as a mode of the present invention. The effects of the portable terminal are the same as the effects of the electronic lock system described above.

As an example, there is provided a portable terminal to be held by a user, the portable terminal being configured to be used in combination with an electronic lock system, the electronic lock system including: a plurality of electronic locks each including: a lock mechanism configured to be alternatively in an unlocked state or a locked state; a lock controller having a function of executing unlocking processing of switching the lock mechanism in the locked state to the unlocked state; a lock receiver configured to receive key information from outside, the key information being information different from information received from a previous user, the receiving of the key information acting as a trigger for the lock controller to execute the unlocking processing; and a lock recorder configured to record the key information, the lock controller being configured to execute the unlocking processing when the key information received by the lock receiver matches the key information recorded in the lock recorder, each of the plurality of electronic locks having a lock identifier assigned thereto, the lock identifier being a unique identifier for distinguishing the plurality of electronic locks from each other; and a server including: a key information generator configured to generate the key information to be supplied to the lock controller of each of the plurality of electronic locks; a server controller configured to control the key information generator; a server recorder configured to record a key generated by the key information generator; and a server communicator configured to perform wireless communication via a predetermined network.

Further, the portable terminal includes: a terminal communicator configured to perform wireless communication to and from the server via the predetermined network; a terminal transfer module configured to transfer the key information to the lock receiver of one of the plurality of electronic locks; and a terminal input module for inputting the lock identifier of the one of the plurality of electronic locks.

The server recorder of the server is configured to record the key information recorded at a current point in time in the lock recorder of each of the plurality of electronic locks under a state of being linked to the lock identifier of the each of the plurality of electronic locks including the lock recorder in which the key information is recorded.

The terminal input module of the portable terminal is configured to receive input of the lock identifier of a specific electronic lock, which is one of the plurality of electronic locks, by an operation of the user who desires to unlock the lock mechanism of the specific electronic lock, and the terminal communicator is configured to transmit the lock identifier input from the terminal input module to the server via the predetermined network.

The server controller of the server is configured to, when the server communicator receives the lock identifier of the specific electronic lock transmitted from the terminal communicator, cause the key information generator to generate new key information, which is the key information to be recorded next in the lock recorder of the specific electronic lock, receive the generated new key information from the key information generator, read out the key information linked to the lock identifier of the specific electronic lock from the server recorder, overwrite the read key information with the new key information, and transmit the key information and the new key information from the server communicator to the portable terminal which has transmitted the lock identifier of the specific electronic lock via the predetermined network.

The terminal communicator of the portable terminal is configured to receive the key information and the new key information from the server communicator, and the terminal transfer module is configured to transfer the key information and the new key information received by the terminal communicator to the lock receiver of the specific electronic lock.

The lock controller of the specific electronic lock is configured to execute the unlocking processing when, of the key information and the new key information transferred from the portable terminal to the lock receiver, the key information matches the key information recorded in the lock recorder, and overwrite the key information recorded in the lock recorder with the new key information.

The inventor of the present application also proposes a method to be executed by a portable terminal to be used in combination with an electronic lock system as a mode of the present invention. The effects of the method are the same as the effects of the electronic lock system described above.

As an example, there is provided a method to be executed by the portable terminal to be used in combination with the electronic lock system described above, the method including the steps of:
(A) receiving, by the terminal input module, input of the lock identifier of a specific electronic lock, which is one of the plurality of electronic locks, by an operation of the user who desires to unlock the lock mechanism of the specific electronic lock;
(B) transmitting, by the terminal communicator, the lock identifier input from the terminal input module to the server via the predetermined network;
(C) receiving, by the terminal communicator, the key information and the new key information from the server communicator; and
(D) transferring, by the terminal transfer module, the key information and the new key information received by the terminal communicator to the lock receiver of the specific electronic lock.

The inventor of the present application also proposes a computer program for causing a predetermined portable terminal to function as a portable terminal to be used in combination with an electronic lock system as a mode of the present invention. The effects of the computer program are the same as the effects of the electronic lock system described above, and the fact that it becomes possible for, for example, a general-purpose portable terminal (a smartphone or other portable mobile device capable of communication and having a built-in computer) to function as the portable terminal to be used in combination with the electronic lock system is also an effect of such a computer program. As an example, there is provided a computer program for causing a predetermined portable terminal to function as the portable terminal to be used in combination with the electronic lock system described above, the computer program being a computer program for causing the predetermined portable terminal to execute a method, the method including the steps of:
(A) receiving, by the terminal input module, input of the lock identifier of a specific electronic lock, which is one of the plurality of electronic locks, by an operation of the user who desires to unlock the lock mechanism of the specific electronic lock;
(B) transmitting, by the terminal communicator, the lock identifier input from the terminal input module to the server via the predetermined network;
(C) receiving, by the terminal communicator, the key information and the new key information from the server communicator; and
(D) transferring, by the terminal transfer module, the key information and the new key information received by the terminal communicator to the lock receiver of the specific electronic lock.

### Brief Description of Drawings

FIG. 1 is a diagram for schematically illustrating an overall configuration of an electronic lock system according to a first embodiment of the present invention;
FIG. 2 is a diagram for illustrating an appearance of a portable terminal included in the electronic lock system illustrated in FIG. 1;
FIG. 3 is a diagram for illustrating a hardware configuration of the portable terminal included in the electronic lock system illustrated in FIG. 1;
FIG. 4 is a block diagram for illustrating function blocks generated in the portable terminal included in the electronic lock system illustrated in FIG. 1;
FIG. 5 is a block diagram for illustrating function blocks generated in a server included in the electronic lock system illustrated in FIG. 1;
FIG. 6 is a diagram for schematically illustrating a configuration of an electronic lock included in the electronic lock system illustrated in FIG. 1 and a door to which the electronic lock is attached;
FIG. 7 is a table for schematically showing an example of data recorded in an initial state in a second recorder of the server included in the electronic lock system illustrated in FIG. 1;
FIG. 8 is a table for schematically showing an example of data recorded in a first recorder of the server included in the electronic lock system illustrated in FIG. 1; and
FIG. 9 is a diagram for illustrating processing to be executed by the electronic lock system illustrated in FIG. 1.

### Description of Embodiments

A preferred first embodiment, a preferred second embodiment, and modification examples of the present invention are now described with reference to the drawings.

It should be noted that common objects in the description of each embodiment and the modification examples are denoted by a common reference symbol, and the description common to each other may be omitted in some cases. Further, corresponding components in each embodiment and the modification examples can be applied to other embodiments and modification examples except when a contradiction occurs.

### <<First Embodiment>>

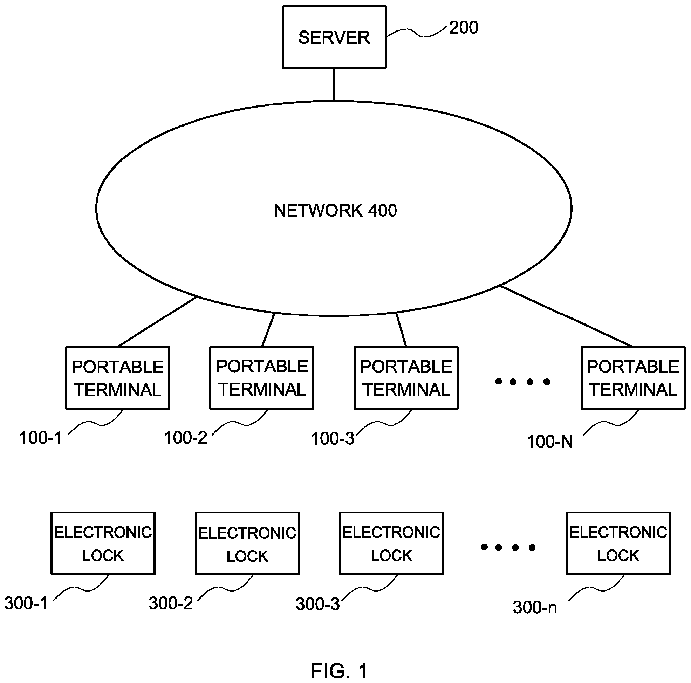

FIG. 1 is a diagram for schematically illustrating an overall configuration of an electronic lock system according to a first embodiment of the present invention.

Examples of the electronic lock system are not particularly limited, but in this embodiment, the electronic lock system is a system for enabling an electronic lock attached to a door of each room of a hotel, which is an example of an accommodation facility, to be unlocked by using a portable terminal held by each user.

The electronic lock system according to this embodiment is used in combination with a plurality of portable terminals 100-1 to 100-N (N is an integer of 2 or more; the plurality of portable terminals 100-1 to 100-N may be hereinafter simply referred to as "portable terminal 100"). The portable terminal 100 is used in combination with the electronic lock system and does not constitute a part of the electronic lock system.

The electronic lock system includes a server 200 and a plurality of electronic locks 300-1 to 300-n ("n" is an integer of 2 or more; the plurality of electronic locks 300-1 to 300-n may be hereinafter simply referred to as "electronic lock 300").

The portable terminal 100 and the server 200 can be connected to a network 400, and can communicate via the network 400. In particular, the portable terminal 100 and the server 200 can communicate to and from each other via the network 400.

Examples of the network 400 are not particularly limited, but in this embodiment, the network 400 is the Internet.

The portable terminal 100 includes a computer. More specifically, the portable terminal 100 in this embodiment is built from a general-purpose portable communication device.

Next, the configuration of the portable terminal 100 is described. The portable terminal 100 is held by user. The procurement of each portable terminal 100 is left to each user, and thus the specifications of the portable terminal 100 possessed by each user are usually different. However, it can be said that, in terms of a relation with the electronic lock system of the present invention, the configuration of each of the portable terminals 100-1 to 100-N is the same.

The portable terminal 100 is, for example, a cell phone, a smartphone, or a tablet computer. All of those components are capable of communicating via the network 400. The portable terminal 100 is also required to be capable of generating function blocks (described later) in the portable terminal 100 by installing a computer program (described later), executing processing (described later), and displaying a second two-dimensional code (described later) on a display. Further, in this embodiment, the portable terminal 100 is required to include a camera for photographing a first two-dimensional code (described later). However, the portable terminal 100 is not limited to this configuration. As long as those conditions are satisfied, other specifications of the portable terminal 100 are not particularly limited.

For example, when the portable terminal 100 is a smartphone or a tablet computer, as a smartphone, the portable terminal 100 may be, for example, an iPhone (trademark) manufactured and sold by Apple Japan GK, and as a tablet computer, the portable terminal 100 may be, for example, an iPad (trademark) manufactured and sold by Apple Japan GK.

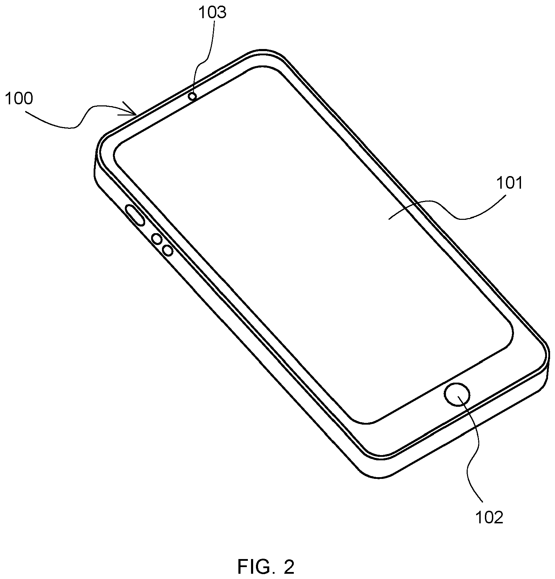

An example of the appearance of the portable terminal 100 is illustrated in FIG. 2.

The portable terminal 100 includes a display 101. The display 101 is used for displaying a still image or a moving image, and a publicly-known or a well-known display may be used. The display 101 is, for example, a liquid crystal display. The portable terminal 100 also includes an input device 102. The input device 102 is used by the user to perform desired input to the portable terminal 100. As the input device 102, a publicly-known or a well-known input device can be used. The input device 102 of the portable terminal 100 in this embodiment is a button type input device, but the input device 102 is not limited thereto, and a numeric keypad, a keyboard, or a trackball, and the like may also be used. When the display 101 is a touch panel, the display 101 also acts as the input device 102, which is the case in this embodiment.

The portable terminal 100 also includes a camera 103. The object denoted as the camera 103 in FIG. 2 is, to be exact, a camera lens. As is well known, an image sensor is arranged behind the camera lens, and images can be captured and image data of the captured images can be generated. In this embodiment, the part for capturing the images and generating the image data is collectively referred to as "camera 103."

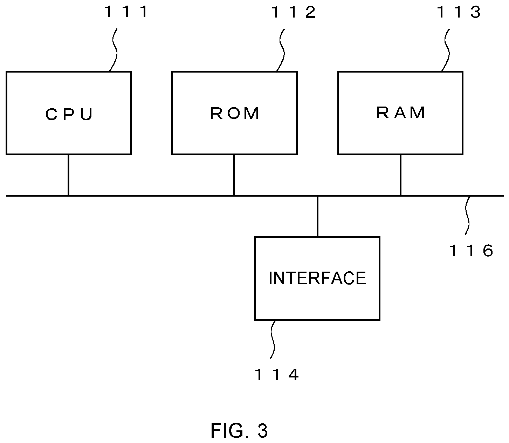

A hardware configuration of the portable terminal 100 is illustrated in FIG. 3.

The hardware includes a central processing unit (CPU) 111, a read-only memory (ROM) 112, a random-access memory (RAM) 113, and an interface 114, which are mutually connected to one another by a bus 116.

The CPU 111 is an arithmetic device for performing an arithmetic operation. The CPU 111 executes processing to be described later by executing, for example, a computer program recorded in the ROM 112 or the RAM 113. Although not shown, the hardware may include a hard disk drive (HDD) or other large-capacity recording device, and the computer program may be recorded in the large-capacity recording device.

The computer program herein includes at least a computer program for causing the portable terminal 100 to execute processing to be described later (e.g., processing for causing the portable terminal 100 to function as the portable terminal of the present invention). The computer program may be preinstalled on the portable terminal 100 or may be installed after the portable terminal 100 is shipped. The computer program may be installed on the portable terminal 100 via a predetermined recording medium such as a memory card, or may be installed via a network such as a LAN or the Internet.

The ROM 112 records computer programs and data required in order for the CPU 111 to execute the processing to be described later. The computer program recorded in the ROM 112 is not limited thereto. When the portable terminal 100 is a smartphone, a computer program or data for implementing, for example, a call function or an electronic mail function required in order for the portable terminal 100 to function as a smartphone is recorded. The portable terminal 100 is also capable of browsing web pages based on data received via the network 400, and includes a publicly-known web browser for that purpose.

The RAM 113 provides a work area required in order for the CPU 111 to perform processing. In some cases, (a part of) the above-mentioned computer program or data may be recorded.

The interface 114 exchanges data between the outside and the CPU 111, the RAM 113, and the like, which are connected via the bus 116. The display 101, the input device 102, and the camera 103, which are described above, are connected to the interface 114. Details of an operation input from the input device 102 and the image data generated by the camera 103 are input to the bus 116 from the interface 114. As is well known, image data for displaying an image on the display 101 is transmitted to the interface 114 via the bus 116, and output from the interface 114 to the display 101. The interface 114 is also connected to a transmission/reception mechanism (not shown), which is publicly-known or well-known means for performing communication to and from the outside via the network 400, which is the Internet. This enables the portable terminal 100 to transmit data via the network 400 and to receive data via the network 400. The data is transmitted or received wirelessly via the network 400 by using, for example, a fourth generation (4G) or fifth generation (5G) network. For example, when the portable terminal 100 is a smartphone or tablet computer, such communication is typically performed wirelessly by using the functions that the smartphone or tablet computer originally has. The data received by the transmission/reception mechanism from the network 400 is received by the interface 114, and the data passed from the interface 114 to the transmission/reception mechanism is transmitted to the outside, for example, to the server 200 via the network 400.

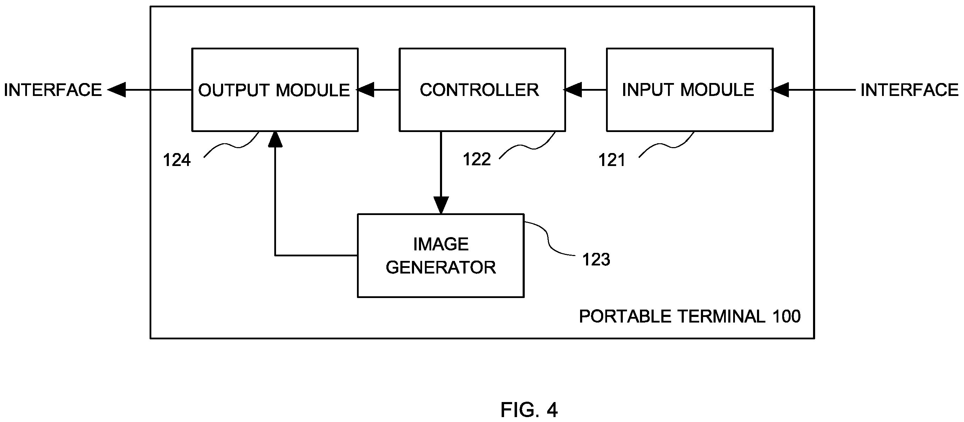

When the CPU 111 executes the computer program, function blocks like those illustrated in FIG. 4 are generated in the portable terminal 100. The following function blocks may be generated by the functions of the above-mentioned computer program alone for causing the portable terminal 100 to function as the portable terminal of the present invention, or may also be generated by the above-mentioned computer program and an OS or another computer program installed in the portable terminal 100 working together in cooperation.

In the portable terminal 100, in terms of a relation with the functions of the present invention, an input module 121, a controller 122, an image generator 123, and an output module 124 are generated.

The input module 121 receives inputs from the interface 114.

The inputs to the input module 121 from the interface 114 may include an input from the input device 102. Examples of the input from the input device 102 include data of a user ID, which is identification information unique to each user for identifying the user, start information, which is information for starting unlocking processing of the electronic lock 300, and reservation application information (described later), which are described in detail later.

The inputs from the interface 114 may also include an input from the transmission/reception mechanism. Examples of the input from the transmission/reception mechanism include key information and new key information, which are information (data) transmitted from the server 200 via the network 400. The key information and new key information are both described later. In this embodiment, in addition to the key information and new key information, reservation information is transmitted from the server 200, and the reservation information is also transmitted from the transmission/reception mechanism to the input module 121 via the interface 114, but the present invention is not limited to this configuration.

The inputs from the interface 114 may also include image data input from the camera 103. The image data input from the camera 103 includes a first two-dimensional code (described later). The image data is transmitted from the camera 103 to the input module 121 via the interface 114.

In any case, the input module 121 transmits the data received from the interface 114 to the controller 122.

The controller 122 performs overall control of each of the function blocks generated in the portable terminal 100.

The controller 122 has a function of analyzing the contents of a predetermined two-dimensional code and extracting information included in the two-dimensional code. This function is referred to as a so-called "two-dimensional code reader" function. The two-dimensional code reader function of the controller 122 may be a function generated by the above-mentioned computer program for causing a predetermined portable terminal to function as the portable terminal of the present invention. However, the present invention is not limited to this configuration. A computer program (app) for causing a smartphone or tablet computer, which are examples of the portable terminal 100, to function as a two-dimensional code reader is publicly known or well known, but the portable terminal 100 may have a function as a two-dimensional code reader generated by a computer program pre-installed in the portable terminal 100 or installed after shipment of the portable terminal 100.

Conversely to the above-mentioned function, the controller 122 also has a function of generating a two-dimensional code including predetermined information from predetermined information. This function is a so-called function as a two-dimensional code generator. The function of the controller 122 as a two-dimensional code generator in the present invention may be a function generated by the above-mentioned computer program for causing a predetermined portable terminal to function as the portable terminal of the present invention. However, the fact that the present invention is not limited to such a configuration is the same as in the case of the function of the two-dimensional code reader.

As described above, the controller 122 may receive start information from the input module 121. When start information is received, the controller 122 generates activation information for activating the camera 103, and transmits the generated activation information to the output module 124.

The controller 122 may receive reservation application information from the input module 121. When reservation application information is received, the controller 122 transmits the received reservation application information to the output module 124.

The controller 122 may receive user ID data from the input module 121. When user ID data is received, the controller 122 transmits the received user ID data to the output module 124. The controller 122 may hold the user ID data, and in that case, the user ID data held by the controller 122 is transmitted from the controller 122 to the output module 124. In this embodiment, the number of times that the user ID is transmitted from the controller 122 to the output module 124 is two.

The controller 122 may receive key information, new key information, and reservation information from the input module 121. When those pieces of information are received, the controller 122 uses the above-mentioned two-dimensional code generator function to generate a second two-dimensional code, which is a two-dimensional code including all of the key information, the new key information, and the reservation information. The controller 122 transmits the generated second two-dimensional code data to the image generator 123.

The controller 122 may receive, from the input module 121, image data transmitted from the camera 103. As described above, this image data is data relating to an image including the first two-dimensional code (described later). When the controller 122 receives this image data, the controller 122 reads out the information included in the second two-dimensional code by using the above-mentioned two-dimensional code reader function. The information includes at least a lock identifier, as is described later. The controller 122 transmits the read lock identifier data to the output module 124. In this embodiment, the lock identifier data is transmitted to the output module 124 together with the above-mentioned user ID data, but the present invention is not limited to this configuration.

The image generator 123 has a function of generating an image to be displayed on the display 101. The image data generated by the image generator 123 is data which determines the image to be displayed on the display 101.

As described above, the image generator 123 may receive the data of the second two-dimensional code from the controller 122. When the image generator 123 receives the data of the second two-dimensional code, the image generator 123 generates image data for displaying the second two-dimensional code on the display 101.

The image data generated by the image generator 123 is transmitted from the image generator 123 to the output module 124. The image data is transmitted from the output module 124 to the display 101 via the interface 114, and the second two-dimensional code is displayed on the display 101.

The output module 124 outputs the data generated by the function blocks included in the portable terminal 100 to the interface 114.

As described above, the output module 124 may receive activation information from the controller 122. When the output module 124 receives activation information, the output module 124 transmits the received activation information to the camera 103 via the interface 114. As a result, the camera 103 is activated, and image data is generated.

The output module 124 may also receive the data of the user ID and reservation application information from the controller 122. When the output module 124 receives the data of the user ID and reservation application information, the output module 124 transmits the data to the transmission/reception mechanism via the interface 114. The data of the user ID and reservation application information are transmitted from the transmission/reception mechanism to the server 200 via the network 400.

The output module 124 may receive the data of the lock identifier and user ID from the controller 122. When the data of the lock identifier and user ID is received from the controller 122, the output module 124 transmits the received data to the transmission/reception mechanism via the interface 114. The data of the lock identifier and user ID are transmitted from the transmission/reception mechanism to the server 200 via the network 400.

The output module 124 may receive, for example, the image data for displaying the second two-dimensional code on the display 101 from the image generator 123. When the output module 124 receives the image data, the output module 124 transmits the received image data to the display 101 via the interface 114. As a result, an image based on the image data is displayed on the display 101.

Next, the configuration of the server 200 is described.

When viewed as hardware, the server 200 may be an existing publicly-known or well-known server. The hardware configuration may be a general configuration, and roughly speaking, may follow the hardware configuration of the portable terminal 100, in which the CPU 111, the ROM 112, the RAM 113, and the interface 114 are connected by the bus 116. However, the server 200 generally includes an HDD or other large-capacity recording device.

The configuration and function of each of the CPU, the ROM, the RAM, the interface, the bus, and the large-capacity recording device included in the server 200 are similar to those in the portable terminal 100. The interface included in the server 200 is connected to a transmission/reception mechanism, which is similar to that included in the portable terminal 100, for performing communication to and from devices outside the server 200 via the network 400. Information (data) transmitted to the interface via the bus is transmitted to the transmission/reception mechanism, and transmitted from the transmission/reception mechanism via the network 400 to, for example, the portable terminal 100. The data transmitted from the portable terminal 100 via the network 400 and received by the transmission/reception mechanism is transmitted from the transmission/reception mechanism to the interface, and transmitted from the interface to the bus.

A display and an input device similar to those included in the portable terminal 100 may be connected to the interface included in the server 200. However, those parts are not particularly relevant to the subject application, and thus description thereof is omitted here.

Function blocks like those described below are generated in the server 200 by executing a computer program, which is recorded in the ROM, large-capacity recording device, or the like included in the server 200, for causing the server 200 to function as the server in the present invention. The following function blocks may be generated by the functions of the computer program alone for causing a general-purpose computer included in the server 200 to function as the server in the present invention, or may also be generated by that computer program and an OS or another computer program installed in the server 200 working together in cooperation. The computer program may be preinstalled on the server 200, or may be installed on the server 200 after shipment. In that case, the computer program may be installed on the server 200 via a predetermined recording medium such as a memory card, or may be installed via a network such as a LAN or the Internet. Those matters are the same as in the case of the portable terminal 100.

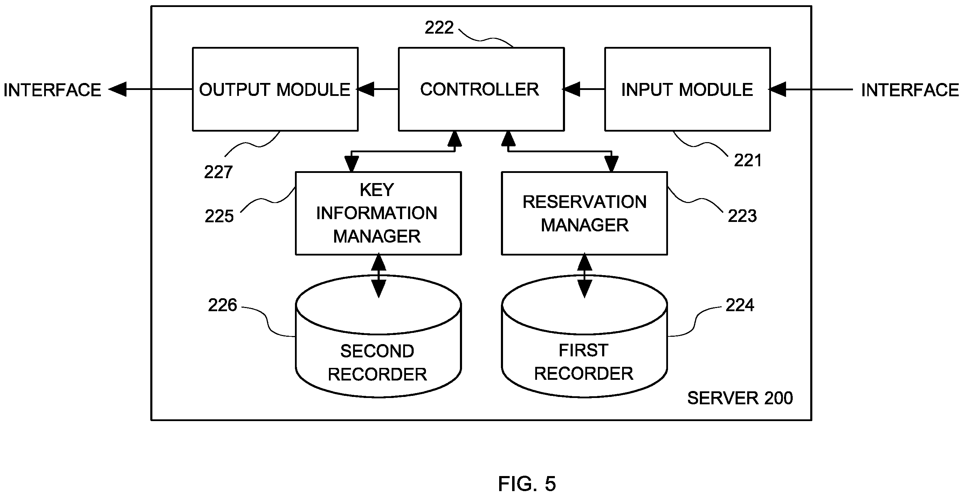

In the server 200, in terms of a relation with the functions of the present invention, an input module 221, a controller 222, a reservation manager 223, a first recorder 224, a key information manager 225, a second recorder 226, and an output module 227 are generated (FIG. 5).

The input module 221 receives inputs from the interface.

The data input from the interface to the input module 221 is the data transmitted from the portable terminal 100 via the network 400 and received by the transmission/reception mechanism of the server 200.

The data received by the transmission/reception mechanism from the portable terminal 100 includes, for example, the data of the user ID and reservation application information, and the data of the user ID and lock identifier. Those pieces of data are transmitted from the transmission/reception mechanism to the interface, and further transmitted to the input module 221. The input module 221 transmits the received data to the controller 222.

The controller 222 performs overall control of the function blocks generated in the server 200.

The controller 222 records a user ID for all users. The user ID is used for publicly-known or well-known uses, such as identification of each user and authentication of users who have transmitted data such as a lock identifier to the controller 222. As described later, the user ID is composed of numbers, alphabetic characters, or a combination thereof. In this embodiment, the user ID is composed of a combination of alphanumerical characters. The method used by the controller 222 to hold the user IDs of all the users may be a publicly-known or well-known technology. For example, the server 200 may assign a user ID to each user, or each user may determine his or her own user ID and notify the server 200 or the administrator of the server 200 of the determined user ID by some sort of method, such as by electronic mail. In any case, it is apparent to those skilled in the art that a unique user ID different from all the other user IDs can be held by, in this embodiment, the controller 222 of the server 200.

The controller 222 receives the data of the user ID and reservation application information from the input module 221. The controller 222 performs authentication when the user ID received from the input module 221 is valid. When the user ID received from the input module 221 matches one of the many user IDs held by the controller 222, the controller 222 authenticates that the user ID or the user who has transmitted the user ID is valid. As a matter of course, the authentication can be performed by using not only a user ID but also a combination of a user ID and a password, or by using another publicly-known or well-known technology. For example, when a combination of a user ID and a password is used for authentication, it is apparent to those skilled in the art that the controller 222 is required to hold not only the user IDs of all the users but also the passwords of the all the users, and that it is required to transmit not only the user IDs but also the password data from the portable terminal 100 to the server 200. In any case, when it is authenticated that the user ID is valid, the controller 222 transmits the user ID and the reservation application information to the reservation manager 223.

The controller 222 may receive data of the user ID and the lock identifier. When the controller 222 receives the data, the controller 222 executes authentication processing for the user ID as described above. When it is authenticated that the user ID is valid, the controller 222 transmits the user ID to the reservation manager 223, and receives the reservation information recorded in the first recorder 224 under a state of being linked to the user ID from the reservation manager 223. The contents of the reservation information data are described later. Further, when it is authenticated that the user ID is valid, and when, in light of the reservation information, the user having the user ID has a right to unlock the electronic lock linked to the lock identifier received by the user, the controller 222 transmits the data of the lock identifier to the key information manager 225, and receives from the key information manager 225 the data of the key information recorded in the second recorder 226 under a state of being linked to the lock identifier and the data of new key information generated by the key information manager 225 as described later. The controller 222 transmits the data of the reservation information received from the reservation manager 223 and the data of the key information and new key information received from the key information manager 225 to the output module 227.

The controller 222 may also receive reservation success/failure information (described later) from the reservation manager 223. When the controller 222 receives reservation success/failure information, the controller 222 transmits the received reservation success/failure information to the output module 227.

The reservation manager 223 manages a reservation status of each room in the hotel in which the electronic lock 300 is attached to a door.

The reservation manager 223 may receive the reservation application information and the user ID from the controller 222. When the reservation manager 223 can make a reservation for the content in the application by the user having the user ID based on the reservation application information, the reservation manager 223 records the reservation content in the first recorder 224. The data of the reservation information, which is information on the reservation content, is sequentially recorded in the first recorder 224. Further, the reservation manager 223 generates reservation success/failure information indicating whether or not a reservation has successfully been received for the content of the reservation application information, and transmits the generated reservation success/failure information to the controller 222.

The first recorder 224 is recording means for recording a large number of pieces of reservation information. The contents of the data recorded in the first recorder 224 are described later, but each piece of reservation information is recorded in the first recorder 224 under a state of being linked to the user ID.

Further, the reservation manager 223 may receive the user ID from the controller 222. When the reservation information linked to the user ID at the time of receiving the user ID exists in the first recorder 224, the reservation manager 223 that has received the user ID reads out the reservation information from the first recorder 224, and transmits the read reservation information to the controller 222.

The key information manager 225 has a function of managing the key information used to unlock each electronic lock 300.

The key information is information used as a key for unlocking the electronic lock 300 which is in a locked state, and is composed of, for example, an appropriate number of (number of digits) of numbers, alphabetic characters, symbols, or a combination thereof. For example, the key information is a combination of 100 numbers, alphabetic characters, and symbols in this embodiment, but the present invention is not limited to this configuration.

The key information manager 225 has a function of generating key information. It is assumed that the key information manager 225 generates key information from a random combination of numbers, alphabetic characters, and symbols, but the present invention is not limited to this configuration. The generated key information is generated by a method that is capable of preventing the same key information from being generated by a publicly-known or well-known technology, such as a method which generates key information 10,000,000 times without duplication, for example.

The timing at which the key information manager 225 generates the new key information is the time when the lock identifier is transmitted from the controller 222. When the lock identifier is transmitted from the controller 222, the key information manager 225 generates new key information. The generated new key information is the "new key information" referred to in the present application. The new key information is transmitted from the key information manager 225 to the second recorder 226, and recorded in the second recorder 226 under a state of being linked to the lock identifier received from the controller 222. Further, when the lock identifier is transmitted from the controller 222, the key information manager 225 reads out, from the second recorder 226, the key information recorded in the second recorder 226 under a state of being linked to the lock identifier. The key information manager 225 transmits the key information read out from the second recorder 226 and the new key information generated by itself to the controller 222.

The key information is recorded in the second recorder 226 in the manner described above. The key information is recorded under a state of being linked to each lock identifier. The key information is updated as described later. The contents of the data recorded in the second recorder 226 and the details of the recording of the key information and the update processing are described later.

The output module 227 outputs the data generated by the function blocks included in the server 200 to the interface.

As described above, the output module 227 may receive, for example, reservation success/failure information, key information, and new key information from the controller 222. When those pieces of information are received, the output module 227 transmits the received information to the transmission/reception mechanism via the interface. All of those pieces of data are transmitted from the transmission/reception mechanism via the network 400 to the portable terminal 100 of the user who has transmitted the reservation application information and the lock identifier data acting as a trigger for the generation of those pieces of data.

Next, the electronic lock 300 is described.

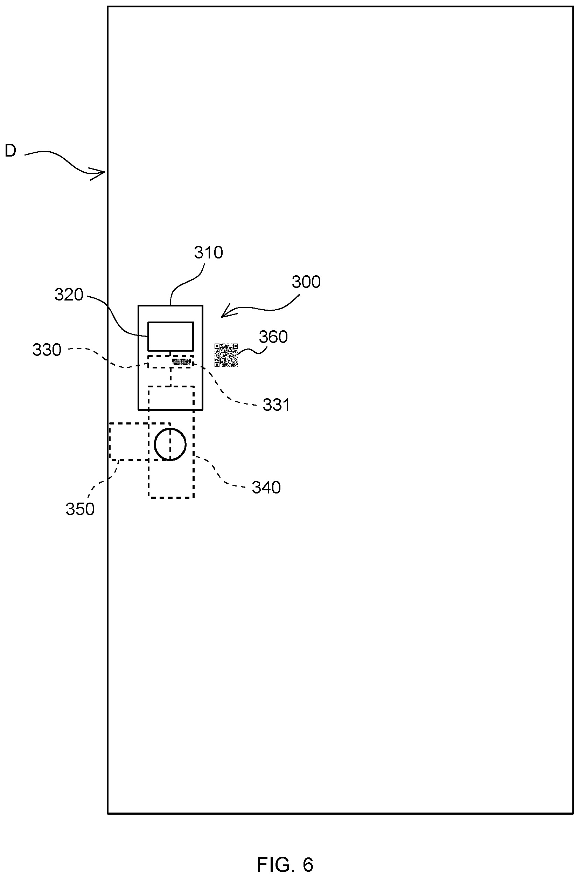

The electronic lock 300 is attached to the door of each hotel room (each guest room for which a right to occupy is given to users, who are customers). In FIG. 6, there is illustrated an outline of a door D to which the electronic lock 300 is attached. In FIG. 6, the door D is shown as viewed from a corridor or other common area.

The electronic lock 300 includes a housing 310 made of resin, for example. The housing 310 includes a reading device 320 capable of reading two-dimensional codes. The details of the reading device 320 are not limited as long as the reading device 320 can read the second two-dimensional code, which is a two-dimensional code displayed on the display 101 of the portable terminal 100, as described later. The reading device 320 is a publicly-known or well-known device, and may be, for example, a camera or a scanner. The reading device 320 may include a light source for illuminating the display 101 of the portable terminal 100 and other components.

The housing 310 of the electronic lock 300 incorporates a control circuit 330 and a lock drive mechanism 340. The control circuit 330 is connected to the reading device 320 and the lock drive mechanism 340. The control circuit 330 receives the data of the second two-dimensional code transmitted from the reading device 320, and controls the lock drive mechanism 340 based on the data of the second two-dimensional code. The control circuit 330 includes a predetermined electric circuit, and includes at least a memory (RAM 331 in this embodiment), which is recording means capable of recording information in a changeable manner. Key information is recorded in the RAM 331. The details of the processing of recording the key information in the RAM are described later. The control circuit 330 has a function as a two-dimensional code reader.

The lock drive mechanism 340 functions as a lock controller in the present invention in cooperation with the control circuit 330. The door D incorporates a lock mechanism 350 which can be alternatively in an unlocked state or a locked state. The lock mechanism 350 may be a publicly-known or a well-known mechanism. As is publicly known or well known, the lock mechanism includes, for example, a deadbolt or other bolt (not shown), and by moving the bolt, it is possible to alternate between an unlocked state and a locked state. The lock drive mechanism 340 includes a motor or other motive power device (not shown) for generating motive power capable of moving the bolt, and is for moving the bolt under the control of the control circuit 330. The lock drive mechanism 340 also may be a publicly-known or well-known mechanism. The lock drive mechanism 340 may protrude from the housing 310 of the electronic lock 300 and partially extend into the interior of the door D, as the lock drive mechanism 340 does in this embodiment, but the present invention is not limited to this configuration. The lock mechanism 350 is driven by the lock drive mechanism 340 under the control of the control circuit 330 to be alternatively in an unlocked state or a locked state.

There are a plurality of, and usually a large number of, electronic locks 300. A lock identifier, which is an identifier for distinguishing each electronic lock 300, is assigned to the electronic lock 300. Each lock identifier is different from the other lock identifiers. The lock identifiers are unique at least for each electronic lock 300 managed by one server 200.

Any information may be included in the lock identifier. For example, when the door D illustrated in FIG. 6 is a door of "AA hotel/BB station front/main building/room 516," the lock identifier may be "AA/BB station front/main building/516," for example. As a matter of course, each piece of information, for example, "AA Hotel," "BB station front," "main building," and "room 516" can be encoded by a publicly-known or well-known technology and used as the lock identifier. In this embodiment, the lock identifier has the form of "AA/BB station front/main building/516." Further, in this embodiment, a first two-dimensional code 360, which is a two-dimensional code including the information on the lock identifier, is arranged in the immediate vicinity of the electronic lock 300 of the door D (in this embodiment, to the right of the electronic lock 300, but the present invention is not limited to this configuration), under a state in which the first two-dimensional code 360 can be understood as being linked to the electronic lock 300. The first two-dimensional code 360 is attached to the door D, for example, under a state of being printed on paper. The first two-dimensional code 360 may be arranged on the electronic lock 300 by printing, engraving, or another method.

Next, description is given of the usage method and operation of the electronic lock system including the server 200 and the electronic lock 300 described above and being used in combination with the portable terminal 100.

### (Preparation before Operation of Electronic Lock System is Started)

Before operation of the electronic lock system described above is started, the electronic lock 300 is installed on each of the doors D of the hotel, and the first two-dimensional code 360 is arranged on the door D or the electronic lock 300. Further, the server 200 as described above is installed.

When each electronic lock 300 is installed, the key information to be used when the electronic lock 300 is initially unlocked (unlocked the first time) is written in the RAM 331 of each electronic lock 300. The writing of the desired key information in the RAM 331 of each electronic lock 300 to be installed may be performed, for example, by writing the key information in the electronic lock 300 before shipment, and thus writing the key information can be easily performed.

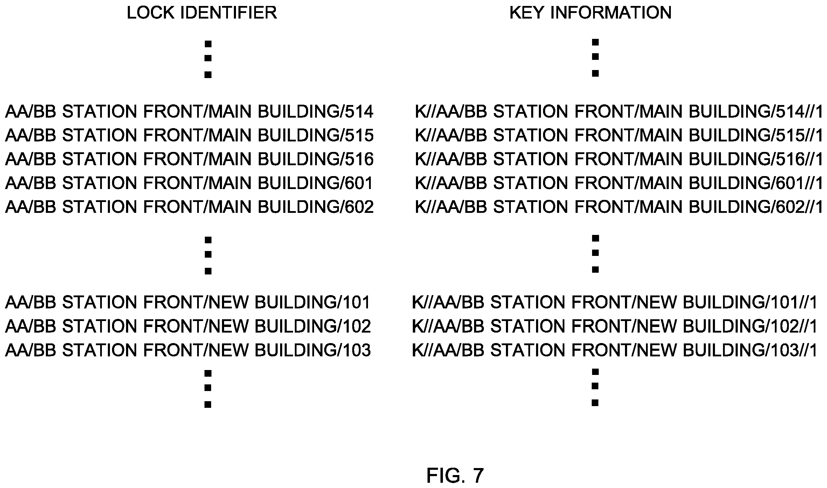

Meanwhile, in the second recorder 226 of the server 200 at the start of operation of the electronic lock system, the initial key information recorded in the RAM 331 of the electronic lock 300 linked to the lock identifier is recorded under a state of being linked to the lock identifier of each electronic lock 300. A schematic representation of the data recorded in the second recorder 226 is as shown in FIG. 7. In FIG. 7, the symbols written in each column of key information have different meanings before and after the "//." For example, in the symbols "K//AA/BB station front/main building/516//1," the "K" at the beginning means the key information, the "AA/BB station front/main building/516" means the key information linked to the lock identifier "AA/BB station front/main building/516," and the last "1" at the end means the first key information linked to the lock identifier. The other symbols written in the columns of the key information can be read in the same way. However, as described above, it should be noted that each piece of key information is a list of alphanumeric characters and symbols.

### (Reservation Processing)

After the above-mentioned preparation is complete, operation of the electronic lock system starts.

First, the user reserves a room he or she wants to use.

The user generates reservation application information identifying which room he or she wants to use, and from and until when he or she wants to use the room, and transmits the generated reservation application information from the portable terminal 100 to the server 200.

In order to simplify the description, in this embodiment, it is assumed that all rooms having a door D to which the electronic lock 300 is attached in this electronic lock system are dedicated to accommodation, and that a check-in time is set in advance to 15:00 and a check-out time is set in advance to 11:00 of the next day. Therefore, when the user reserves accommodation by designating a certain date and the reservation is established, the user receives the right to occupy the reserved room from 15:00 on the designated date to 11:00 on the following day.

All of the rooms are dedicated to accommodation, and thus in this embodiment, in the case of making a reservation, when the user specifies the room, year, month, and day he or she wants to stay, reservation application information identifying which room the user wants to use and from and until when the user wants to use the room is generated. In this embodiment, two pieces of information, that is, "from when" and "until when" the user wants to use a certain room (two timing points of the start of usage of the room and the end of usage of the room) are identified based on one piece of information, that is, "what year, month, and day does the user want to stay?," but it is apparent to those skilled in the art that the two timing points of the start of use and the end of use can be set regardless of fixed times like the check-in time and check-out time by having the user individually input information on the two timing points of the start of use and the end of use. Further, when such a method is adopted, it is obvious that the data recorded in the first recorder 224 is different from the data described later.

Specifically, the user generates the reservation application information by operating the input device 102 of his or her portable terminal 100. The room can be identified, for example, by having the user input text such as "AA hotel, BB station front, main building, room 516," or by having the user input each piece of the information "AA hotel," "BB station front," "main building," and "room 516" (or information encoded from each of those pieces of information) to the portable terminal 100, or by having the user select each of those pieces of information from, for example, a pulldown menu on a screen displayed on the display 101 provided by the server 200 via the browser included in the portable terminal 100 or on a screen displayed on the display 101 provided by a function of, for example, a dedicated application installed on the portable terminal 100. Further, in order to identify the year, month, and day of the accommodation desired by the user, for example, the user may be prompted to input the date as text, for example, or may be prompted to select the date on a calendar displayed on the display 101. In any case, an existing technology can be utilized for the user interface to be used for inputting the reservation application information.

The reservation application information is transmitted from the input device 102 to the input module 121 via the interface 114, and transmitted from the input module 121 to the controller 122.

Meanwhile, the user inputs the user ID. The user ID is also transmitted from the input device 102 to the controller 122 in the same manner as the reservation application information. When the controller 122 holds the user ID which has been previously input, the input of the user ID here can be omitted.

The data of the user ID and reservation application information are transmitted from the controller 122 to the output module 124, and further transmitted to the transmission/reception mechanism. The data of the user ID and reservation application information is transmitted from the transmission/reception mechanism to the server 200 via the network 400.

The server 200 receives the user ID and the reservation application information by using its own transmission/reception mechanism.

The data of the user ID and reservation application information is transmitted from the transmission/reception mechanism to the controller 222 via the interface and the input module 221.

When the controller 222 receives the user ID and the reservation application information, the controller 222 performs authentication processing to confirm whether or not the user ID or the user who has transmitted the user ID is valid. Specifically, when one of the user IDs of all the users held by the controller 222 matches the user ID transmitted from the portable terminal 100, the controller 222 authenticates the transmitted user ID or the user who has transmitted the user ID as valid. After the authentication is performed, the controller 222 transmits the data of the user ID and reservation application information to the reservation manager 223.

When the reservation manager 223 receives the reservation application information and the user ID from the controller 222, the reservation manager 223 identifies whether or not it is possible to make a reservation for the content specified by the reservation application information based on the data content recorded in the first recorder 224.

For example, in a case in which the content identified by the reservation application information is that the user wants to stay in "AA hotel, BB station front, main building, room 516" on "December 24, 2019," and the user ID of the user who has made the reservation is "xxxxxxxxx," the reservation manager 223 confirms whether or not it is possible for the user to stay in that room on that day by referring to the data recorded in the first recorder 224.

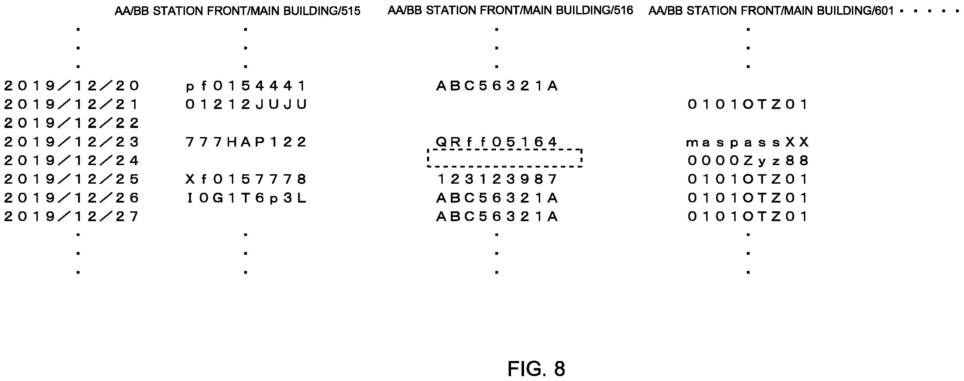

An example of the data recorded in the first recorder 224 is shown in FIG. 8. The indications "AA/BB station front/main building/515," "AA/BB station front/main building/516," and "AA/BB station front/main building/601" in the upper part of FIG. 8 are identifiers which identify each room. In this embodiment, the identifier for identifying each room is the same as the lock identifier assigned to the electronic lock 300 of the door D of the room, but the present invention is not limited to this configuration. Further, the indications "2019/12/20," "2019/12/21," and "2019/12/22" represent the dates of December 20, 2019, December 21, 2019, and December 22, 2019. For example, the indication "01212JUJU" is shown at the intersection of "2019/12/21" with the column "AA/BB station front/main building/515." This indicates that the accommodation reservation for the room having the identifier "AA/BB station front/main building/515" on December 21, 2019, is made by the user having the user ID "01212JUJU" (that is, reservation of that room is full for that day).

The intersection of "2019/12/24" with the column "AA/BB station front/main building/516" (in FIG. 8, the section surrounded by the rectangular dashed line) is blank, which indicates that an accommodation reservation has not been made for the room having the identifier "AA/BB station front/main building/516" on December 24, 2019 (that is, reservation of that room is not full for that day). Therefore, the reservation manager 223 determines that the reservation application based on the reservation application information from the user having the user ID "xxxxxxxxx," who wants to stay in "AA hotel, BB station front, main building, room 516" on "December 24, 2019," can be accepted. Meanwhile, when the room designated by the reservation application information has already been reserved by another user for the designated date and time, the reservation manager 223 determines that the reservation application based on the reservation application information cannot be accepted.

When the reservation can be made, the reservation manager 223 writes the reservation content based on the reservation application information in the first recorder 224 (in the above-mentioned example, writes "xxxxxxxxx" in the intersection of "2019/12/24" with the column "AA/BB station front/main building/516" in FIG. 8 (the section surrounded by the rectangular dashed line in FIG. 8)). Through writing of "xxxxxxxxx" in the intersection of "2019/12/24" with the column "AA/BB station front/main building/516," information indicating that the user having the user ID "xxxxxxxxx" has reserved the room having the identifier "AA/BB station front/main building/516" on "2019/12/24" is generated. This information is the reservation information. The reservation manager 223 also generates reservation success/failure information indicating whether or not reservation is possible, and transmits the generated reservation success/failure information to the controller 222.

The controller 222 transmits the reservation success/failure information to the output module 227. The reservation success/failure information data is transmitted from the output module 227 to the transmission/reception mechanism via the interface, and further transmitted via the network 400 to the portable terminal 100 which has transmitted the data of the user ID and reservation application information.

The reservation success/failure information data is received by the transmission/reception mechanism of the portable terminal 100, and transmitted to the controller 122 via the interface 114 and the input module 121. The controller 122 transmits the reservation success/failure information data to the image generator 123. The image generator 123 generates image data for an image corresponding to the reservation success/failure information, and transmits the generated image data to the output module 124. The image data is transmitted from the output module 124 to the display 101 via the interface 114, and the display 101 displays an image based on the image data.

By seeing the image, the user can know whether or not the server 200 has approved the reservation based on the reservation application information transmitted from the portable terminal 100 of the user. As a result, the above-mentioned user having the user ID "xxxxxxxxx" knows from the image displayed on the display 101 that the server 200 has accepted the reservation application made by the user based on the reservation application information.

This concludes the reservation processing.

At the above-mentioned reservation processing stage, the server 200 can, for example, request the user to perform payment by using a credit card, or register a credit card number to ensure that payment can be made later. Those requests can also be used as conditions for the server 200 to accept the reservation based on the reservation application information.

As a matter of course, payment may be performed before or after the electronic lock 300 is unlocked, as described later.

The processing relating to payment may be performed in an appropriate manner in accordance with a publicly-known or a well-known technology.

### (Unlocking Processing)

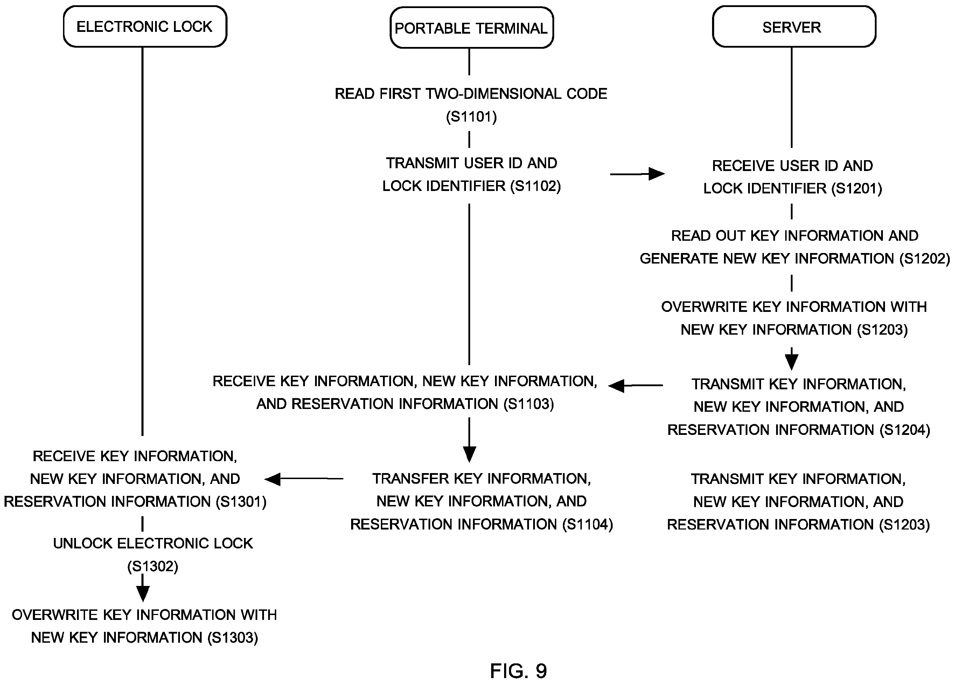

There is now described a case of performing unlocking. In the following description, first, there is described a case in which a user having a user ID "xxxxxxxxx" who has made a reservation for accommodation at "AA hotel, BB station front, main building, room 516" for one night from "December 24, 2019" has arrived in front of the room and is unlocking the electronic lock 300 for the first time. FIG. 9 is used in the description of this case.

When performing unlocking, the user stands in front of the door D of the reserved room at the time he or she has reserved. First, the user inputs start information to the portable terminal 100.

The start information is an expression of an intention by the user to execute unlocking of the electronic lock 300 from now. The start information is input by using the input device 102 of the portable terminal 100. The start information reaches the controller 122 from the input device 102 via the interface 114 and the input module 121.

The controller 122 receives the start information, generates activation information for activating the camera 103 included in the portable terminal 100, and transmits the generated activation information to the output module 124. The activation information is transmitted from the output module 124 to the camera 103 via the interface 114. When the camera 103 receives the activation information, the camera 103 activates.

When the camera 103 is activated, the user holds the camera 103 of the portable terminal 100 in front of the first two-dimensional code 360 arranged on the door D of the room reserved by the user, and the camera 103 photographs the first two-dimensional code 360. The camera 103 generates image data of the image including the first two-dimensional code 360. The image data is transmitted from the camera 103 to the input module 121 via the interface 114, and further reaches the controller 122.

The controller 122 reads the data included in the first two-dimensional code 360 shown in the image data photographed by the camera 103 by using the function of the controller 122 as a two-dimensional code reader. The first two-dimensional code 360 arranged on the door D of the room reserved by the user having the user ID "xxxxxxxxx" includes the lock identifier "AA/BB station front/main building/516," and thus the controller 122 reads the lock identifier data from the first two-dimensional code 360 (Step S1101). The processing performed by the portable terminal 100 here is acquisition of the lock identifier. When the lock identifier is arranged on the door D or on the electronic lock 300 under a state in which the user can visually confirm the lock identifier, for example, the user may send the data of the lock identifier to the controller 122 by manually inputting the lock identifier by using the input device 102. Further, when the electronic lock 300 and the portable terminal 100 can communicate to and from each other by Bluetooth or another communication method, for example, the controller 122 of the portable terminal 100 may obtain the data of the lock identifier by transmitting the data of the lock identifier recorded in the RAM 331 from the electronic lock 300 to the portable terminal 100.

Meanwhile, the user inputs the user ID. It does not matter whether the user ID is input before or after the camera 103 photographs the image of the first two-dimensional code 360. The user ID is input by using the input device 102 in the same manner as in the reservation processing. Then, the user ID data is input to the controller 122. When the controller 122 holds the user ID data, the input of the user ID by the user may be omitted here as well.

The controller 122 transmits the data of the user ID and lock identifier to the output module 124. The data of the user ID and lock identifier is transmitted to the transmission/reception mechanism via the interface 114, and further transmitted to the server 200 via the network 400 (Step S1102).

The server 200 receives the data of the user ID and lock identifier by using its own transmission/reception mechanism (Step S1201).

The data of the user ID and lock identifier are transmitted from the transmission/reception mechanism to the controller 222 via the interface and the input module 221.

When the controller 222 receives the data of the user ID and lock identifier, the controller 222 executes authentication processing for the user ID. The authentication processing is performed in the same manner as described for the reservation processing. After the user ID is authenticated as valid, the controller 222 transmits the user ID to the reservation manager 223.

When the reservation manager 223 receives the user ID, the reservation manager 223 searches for whether or not reservation information on the user having the user ID and including the time at which the user ID is received exists in the first recorder 224. When such reservation information exists, the reservation manager 223 reads out the reservation information on the user having the user ID. The reservation information to be read out includes at least information capable of identifying the last day (more precisely, the time on the last day) that the user having the user ID in the read reservation information has the right to occupy the room. In this embodiment, when the user is staying for one night, the information is information or data identifying the date of the day of accommodation, and when the user is staying for multiple nights, the information is information or data identifying the date of the last day of accommodation. For example, the data read out as the reservation information on the user having the user ID "xxxxxxxxx" given as an example in this embodiment includes, at a minimum, the data "December 24, 2019 (or 2019/12/24))." Further, for example, for the user having the user ID "0101OTZ01, " there is the reservation information that the user is staying for three consecutive nights from "December 25, 2019" in a room having the identifier "AA/BB station front/main building/601," and thus the data to be read out in that case includes at least the data "December 27, 2019 (or 2019/12/27)."

The reservation manager 223 transmits the read reservation information to the controller 222. Meanwhile, when there is no reservation information satisfying the above-mentioned conditions, the reservation manager 223 notifies the controller 222 that the reservation information does not exist. The controller 222 receives the notification, and does not perform subsequent processing. Therefore, the user cannot unlock the electronic lock 300 having the lock identifier transmitted to the server 200 together with the user ID. As a matter of course, processing based on a publicly-known or well-known technology may be executed to transmit a message from the server 200 to the portable terminal 100 of the user stating that the lock cannot be unlocked and the reasons why, for example, a message such as "reservation does not exist."

When the controller 222 receives the reservation information from the reservation manager 223, the controller 222 transmits the lock identifier together transmitted with the user ID from the user to the key information manager 225.

When the lock identifier is transmitted from the controller 222, the key information manager 225 reads out the key information from the second recorder 226 and generates new key information (Step S1202).

More specifically, when the lock identifier is transmitted from the controller 222, the key information manager 225 reads out, from the second recorder 226, the key information linked to the lock identifier transmitted from the controller 222. When the electronic lock 300 linked to the lock identifier transmitted by the user to the server 200 has not been unlocked, the read key information is "K//AA/BB station front/main building/516//1."

Meanwhile, the key information manager 225 generates new key information. The generated new key information is the "new key information" referred to in the present application. In this example, the new key information is "K//AA/BB station front/main building/516//2." The new key information is transmitted from the key information manager 225 to the second recorder 226, and recorded in the second recorder 226 under a state of being linked to the lock identifier received from the controller 222. At this time, the key information is overwritten with new key information (Step S1203). In other words, the key information linked to the lock identifier is updated to the new key information. The overwriting of the key information with the new key information may be performed at an appropriate timing until the key information is overwritten with the new key information in the RAM 331 of the electronic lock 300 as described later. In that case, the new key information is temporarily stored, for example, in the second recorder 226 until the key information is overwritten.

The key information manager 225 temporarily has two types of key information, that is, the key information and the new key information. The key information manager 225 transmits the data of the key information and new key information to the controller 222.

The controller 222 transmits the data of the key information, new key information, and reservation information to the output module 227 in a mutually linked state.

Those pieces of data are transmitted from the output module 227 to the transmission/reception mechanism via the interface under a state of being linked to each other, and then transmitted from the transmission/reception mechanism via the network 400 to the portable terminal 100 that has transmitted the data of the user ID and lock identifier (Step S1204).

The portable terminal 100 receives the data of the key information, new key information, and reservation information linked to each other by using its own transmission/reception mechanism (Step S1103).

Those piece of data are transmitted from the transmission/reception mechanism to the controller 122 via the interface and the input module 121.

When the controller 122 receives those piece of data, the controller 122 uses the two-dimensional code generator function of the controller 122 to generate a two-dimensional code having information including the key information, the new key information, and the reservation information. This is the second two-dimensional code. The data of the second two-dimensional code is transmitted from the controller 122 to the image generator 123.

The image generator 123 generates image data for displaying the second two-dimensional code on the display 101. The image data is transmitted from the image generator 123 to the output module 124, and further transmitted to the display 101 via the interface 114. As a result, the display 101 displays the second two-dimensional code.

The processing from the arrival of the key information, new key information, and reservation information data from the server 200 to the portable terminal 100 until the second two-dimensional code is displayed on the display 101, or more specifically, the processing from the photographing of the first two-dimensional code by the camera 103 of the portable terminal 100 until the display of the second two-dimensional code, can be automatic processing that does not require any action from the user. With this processing, the burden on the user can be reduced.

When the second two-dimensional code is displayed on the display 101 of the portable terminal 100, the user holds the second two-dimensional code in front of the reading device 320 of the electronic lock 300. Then, the reading device 320 of the electronic lock 300 reads the second two-dimensional code displayed on the display 101. As a result, the key information, new key information, and reservation information included in the second two-dimensional code are transferred from the portable terminal 100 (Step S1104), and those pieces of information are received by the electronic lock 300 (Step S1301).

In this example, the key information, the new key information, and the reservation information are transferred from the portable terminal 100 to the electronic lock 300 under a state in which those pieces of information are included in the second two-dimensional code, but the present invention is not limited to this configuration. For example, when the portable terminal 100 and the electronic lock 300 can communicate to and from each other via Bluetooth or other communication, the key information, the new key information, and the reservation information can be transferred from the portable terminal 100 to the electronic lock 300 via such communication.

The reading device 320 transmits data of the second two-dimensional code to the control circuit 330 included in the electronic lock 300. The control circuit 330 has a function as a two-dimensional code reader for extracting from the second two-dimensional code the information included therein, and thus the control circuit 330 reads out the key information, the new key information, and the reservation information from the received second two-dimensional code. The key information is "K//AA/BB station front/main building/516//1," the new key information is "K//AA/BB station front/main building/516//2," and the reservation information is "2019/12/24."

Meanwhile, the control circuit 330 reads out from the RAM 331 the key information recorded in the RAM 331. The key information is "K//AA/BB station front/main building/516//1" when the electronic lock 300 has never been unlocked.

The control circuit 330 compares the key information read out from the second two-dimensional code with the key information read out from the RAM 331. When the two pieces of key information match, the control circuit 330 generates an unlock signal, which is a signal instructing the lock drive mechanism 340 to unlock the lock mechanism 350, and transmits the generated unlock signal to the lock drive mechanism 340. To begin with, the key information recorded in the RAM 331 of a certain electronic lock 300 and the key information recorded in the second recorder 226 of the server 200 under a state of being linked to the lock identifier assigned to the electronic lock 300 match, and thus when the control circuit 330 compares the key information read out from the second two-dimensional code with the key information read out from the RAM 331, the two pieces of key information always match unless there is fraud or there is a malfunction in the server 200, the portable terminal 100, the electronic lock 300, or the like. Therefore, as long as there is no fraud and so on, for example, the control circuit 330 generates an unlock signal, and transmits the generated unlock signal to the lock drive mechanism 340.

When the lock drive mechanism 340 receives the unlock signal, the lock drive mechanism 340 unlocks the lock mechanism 350 from the locked state (Step S1302). As a result, the electronic lock 300 is unlocked, and the user can open the door D and use the room.

As a matter of course, the user may go in and out of the room.

When going in and out of the room, and in particular, when the user wants to enter the room again after having left the room, the user is required to again switch the electronic lock 300 attached to the door D of the room from a locked state to an unlocked state.

In this embodiment, the data of the second two-dimensional code generated by the portable terminal 100 is held in, for example, the controller 122 included in the portable terminal 100 at least until the arrival of the check-out time on the day of accommodation reserved by the user. As long as the data of the second two-dimensional code exists in the portable terminal 100, the second two-dimensional code can be displayed again on the display 101 of the portable terminal 100 at any time by the user operating the input module 121 of the portable terminal 100.

Meanwhile, in this embodiment, as described above, the control circuit 330 of the electronic lock 300 extracts the key information, the new key information, and the reservation information from the second two-dimensional code received from the portable terminal 100. As already described, the extracted key information is used to unlock the electronic lock 300 based on a comparison with the key information recorded in the RAM 331. Meanwhile, the new key information is held in the control circuit 330 and not recorded in the RAM 331 until the check-out time (11:00 on December 25, 2019) of the room of the user having the user ID "xxxxxxxxx" identified in the reservation information.

Therefore, the key information included in the second two-dimensional code that can be displayed on the display 101 of the portable terminal 100 until the check-out time arrives and the key information that the control circuit 330 reads out from the RAM 331 until the check-out time arrives maintains a correspond state.

As a result, similarly to the case in which the electronic lock 300 is unlocked by the user for the first time, the user can change the electronic lock 300 from a locked state to an unlocked state at any time until the check-out time arrives by again displaying the second two-dimensional code on the display 101 of the portable terminal 100 and reading the displayed second two-dimensional code with the reading device 320 of the electronic lock 300. When the same second two-dimensional code is read twice or more by the reading device 320 of the electronic lock 300, only the key information is used on the electronic lock 300 side.

The change from an unlocked state to a locked state of the electronic lock 300 can be performed in any manner. For example, the electronic lock 300 may employ a so-called auto-lock mechanism in which the electronic lock 300 changes from an unlocked state to a locked state simultaneously with the closing of the door D, or the electronic lock 300 may be configured to change from an unlocked state to a locked state after a predetermined time period has elapsed since the electronic lock 300 became an unlocked state.

When the check-out time of the user arrives, the new key information held in the control circuit 330 of the electronic lock 300 is transmitted to the RAM 331, and the key information is overwritten with the new key information (Step S1303). As a result, the new key information becomes newly next key information. That is, when the check-out time passes, the key information recorded in the RAM 331 changes to "K//AA/BB station front/main building/516//2." This processing can be implemented when the electronic lock 300 incorporates a clock and a calendar for grasping the current time including date and time.

After that, even when the user displays the second two-dimensional code including the key information "K//AA/BB station front/main building/516//1" on the display 101 of the portable terminal 100 and uses the reading device 320 of the electronic lock 300 to read the key information, the key information included in the second two-dimensional code does not match the key information recorded in the RAM 331 of the electronic lock 300, and hence the electronic lock 300 does not unlock.

Meanwhile, at least by the time the above-mentioned check-out time arrives (theoretically, this may be a predetermined timing until the check-in time of the next user arrives), the same key information as the key information "K//AA/BB station front/main building/516//2" recorded in the RAM 331 of the electronic lock 300 is written in the portion linked to the lock identifier of the electronic lock in the second recorder 226 of the server 200. That is, in the second recorder 226 of the server 200 as well, the key information is overwritten with the new key information, and the new key information becomes new key information.

Therefore, the next person who tries to unlock the electronic lock of the door D of the room having the identifier "AA/BB station front/main building/516" can unlock the electronic lock 300 when the key information "K//AA/BB station front/main building/516//2" is provided from the server 200 to the portable terminal 100. At this time, the pieces of information provided from the server 200 to the portable terminal 100 are the key information "K//AA/BB station front/main building/516//2," the new key information "K//AA/BB station front/main building/516//3," and the reservation information. Those pieces of information are transferred from the portable terminal 100 to the electronic lock 300. When the user checks out, the key information recorded in the RAM 331 of the electronic lock 300 and the key information recorded in the second recorder 226 of the server 200 both change to "K//AA/BB station front/main building/516//3."

Generally speaking, when the key information held by the electronic lock 300 and the server 200 is "K//AA/BB station front/main building/516//n" ("n" is an integer), the key information "K//AA/BB station front/main building/516//n" and the new key information "K//AA/BB station front/main building/516//n+1" are supplied from the server 200 to the portable terminal 100 of the user trying to unlock the electronic lock 300. The key information and the new key information are transferred from the portable terminal 100 to the electronic lock 300, and when the key information transferred from the portable terminal 100 to the electronic lock 300 and the key information recorded in the electronic lock 300 match, the electronic lock 300 can be unlocked. Meanwhile, when the key information expires, the key information recorded in the RAM 331 of the electronic lock 300 and the key information recorded in the second recorder 226 of the server 200 under a state of being linked to the lock identifier of the electronic lock 300 both change to "K//AA/BB station front/main building/516//n+1."

In this way, in this embodiment, the key information recorded in the RAM 331 of the electronic lock 300 and the key information recorded in the second recorder 226 of the server 200 under a state of being linked to the lock identifier of the electronic lock 300 change in a synchronized state despite the absence of means for direct communication between the server 200 and the electronic lock 300. This state is maintained for all of the electronic locks 300.

### <<Second Embodiment>>

An electronic lock system according to a second embodiment of the present invention is almost the same as the electronic lock system of the first embodiment.

The difference between the electronic lock system of the second embodiment and the electronic lock system of the first embodiment is that the electronic lock system of the first embodiment unlocks an electronic lock 300 attached to the door D of the room of a hotel, which is an accommodation facility, whereas the electronic lock system of the second embodiment unlocks an electronic lock 300 attached to the door of a locker used for hourly rental (for example, a public locker often seen at a station).

For a user who uses a locker, even though the user may determine in advance a usage start time, it is difficult for the user to determine in advance a usage end time. Therefore, it is difficult for an electronic lock system used for this purpose to incorporate the concept of "reservation," in which the usage start time and usage end time of the locker are set in advance, as described in the first embodiment.

Meanwhile, for the user, the locker is usable as long as the state of the electronic lock can be changed from the locked state to the unlocked state twice, that is, at the usage start time and the usage end time.

Taking this into consideration, the electronic lock system of the second embodiment is as follows.

As with the case of the first embodiment, the electronic lock system of the second embodiment includes a plurality of electronic locks 300 and a server 200, and is used in combination with the portable terminal 100 held by the user.

In the electronic lock system of the second embodiment, the components and functions of the server 200 and processing to be executed by the server 200 are basically the same as those in the server 200 in the first embodiment, but because the second embodiment does not have the concept of "reservation," the server 200 in the second embodiment does not have the reservation manager 223 and the first recorder 224. Further, the server 200 in the second embodiment does not handle reservation application information and reservation information.

The components and functions of the portable terminal 100 and processing to be executed by the portable terminal 100 of the second embodiment are basically the same as those of the portable terminal 100 of the first embodiment, but the portable terminal 100 does not handle reservation application information and reservation information.

The components and functions of the electronic lock 300 and processing to be executed by the electronic lock 300 in the second embodiment are basically the same as those of the electronic lock 300 in the first embodiment, but the timing of overwriting the key information recorded in the RAM 331 with the new key information is different from that in the first embodiment.

There is now described a method of using the electronic lock 300 and the operation of the electronic lock 300 in the second embodiment.

### (Preparation before Operation of Electronic Lock System is Started)

There is no difference in the preparation between the first embodiment and the second embodiment.

The only difference from the first embodiment is that the object to which the electronic lock 300 is attached in the second embodiment is the door of the locker.

### (Reservation Processing)

Unlike the first embodiment, reservation processing is not executed in the second embodiment.

### (Unlocking Processing)

The user comes in front of the locker when using the locker. However, because there is no reservation, the user selects a locker that is available, that is, not being used by someone, and tries to unlock the electronic lock 300 attached to the locker door. As with the case of the first embodiment, a first two-dimensional code 360 is arranged on the locker door or the electronic lock 300.

First, the user inputs the start information in the portable terminal 100. As with the case of the first embodiment, the controller 122 receives the start information, and then generates activation information. The activation information is transmitted to the camera 103, and the camera 103 activates. When the camera 103 is activated, the user photographs the first two-dimensional code 360 arranged on the door of the locker, for example, that the user intends to use by using the camera 103 of the portable terminal 100.

The image data of the image including the first two-dimensional code 360 generated by the camera 103 is transmitted to the controller 122. The controller 122 reads the lock identifier included in the first two-dimensional code 360 in the image data photographed by the camera 103 by using the two-dimensional code reader function of the controller 122.

The data of the user ID and lock identifier is transmitted from the portable terminal 100 to the server 200 via the network 400. This corresponds to the processing of Step S1102 in the first embodiment.

The server 200 receives the data of the user ID and lock identifier via its own transmission/reception mechanism. This corresponds to the processing of Step S1201 in the first embodiment.

The data of the user ID and lock identifier is transmitted to the controller 222. When the controller 222 receives the data of the user ID and lock identifier, the controller 222 executes authentication processing for the user ID. At this time, the processing required for billing is generally performed.

When it is authenticated that the user ID is valid, the controller 222 transmits the lock identifier transmitted from the user to the key information manager 225.

When the lock identifier is transmitted from the controller 222, the key information manager 225 reads out the key information from the second recorder 226, and generates new key information. This corresponds to the processing of Step S1202 in the first embodiment. The processing is performed in the same manner as in the first embodiment. However, in the first embodiment, the overwriting of the key information with the new key information may be performed at an appropriate timing until the key information is overwritten with the new key information in the RAM 331 of the electronic lock 300, but in the second embodiment, it is difficult for the server 200 to know the timing at which the key information is to be overwritten with the new key information in the RAM 331 of the electronic lock 300, and hence, in the second recorder 226 of the server 200 in the second embodiment, it is preferred that the key information be overwritten with the new key information as soon as the new key information is generated.

The key information and the new key information are transmitted from the server 200 to the portable terminal 100 under a state of being linked to each other. This corresponds to the processing of Step S1204 in the first embodiment.

The portable terminal 100 receives the data of the mutually-linked key information and new key information. This corresponds to the processing of Step S1103 in the first embodiment.

When the controller 122 receives those pieces of data, the controller 122 uses the two-dimensional code generator function of the controller 122 to generate a second two-dimensional code, which is a two-dimensional code having information including the key information and the new key information. As a result, as with the case of the first embodiment, the second two-dimensional code is displayed on the display 101.

When the second two-dimensional code is displayed on the display 101 of the portable terminal 100, the user holds the second two-dimensional code in front of the reading device 320 of the electronic lock 300, and the reading device 320 of the electronic lock 300 reads the second two-dimensional code displayed on the display 101. As a result, the key information and the new key information included in the second two-dimensional code are transferred from the portable terminal 100, and those pieces of information are received by the electronic lock 300. Those processes correspond to the processing of Step S1104 and Step S1301 in the first embodiment.

The reading device 320 transmits the data of the second two-dimensional code to the control circuit 330 included in the electronic lock 300. The control circuit 330 extracts, from the second two-dimensional code, the key information and the new key information, which are the pieces of information included in the second two-dimensional code.

Further, the control circuit 330 reads out, from the RAM 331, the key information recorded in the RAM 331.

The control circuit 330 compares the key information read out from the second two-dimensional code with the key information read from the RAM 331. When the two pieces of key information match, the control circuit 330 generates an unlock signal, which is a signal instructing the lock drive mechanism 340 to unlock the lock mechanism 350, and transmits the generated unlock signal to the lock drive mechanism 340. As long as there is no fraud, for example, the control circuit 330 generates an unlock signal, and transmits the generated unlock signal to the lock drive mechanism 340. When the lock drive mechanism 340 receives the unlock signal, the lock drive mechanism 340 unlocks the lock mechanism 350 from the locked state. This corresponds to the processing of Step S1302 in the first embodiment. In this way, the electronic lock 300 is unlocked, and the user can open the door and use the locker.

The user puts his or her baggage in the locker. When the user closes the locker door, the electronic lock 300 changes to a locked state. The electronic lock 300 in the second embodiment employs an auto-lock mechanism. The user moves away from the locker while leaving the baggage in the locker.

The user returns to the locker again to take out the baggage.

In the second embodiment, the data of the second two-dimensional code generated by the portable terminal 100 remains stored in the controller 122, for example, of the portable terminal 100 as long as the user has not deleted the data. Therefore, basically, the user can display the second two-dimensional code again on the display 101 of the portable terminal 100 at any time.

Meanwhile, in the second embodiment, the control circuit 330 of the electronic lock 300 extracts the key information, and the new key information from the second two-dimensional code received from the portable terminal 100, and uses the extracted key information to unlock the electronic lock 300 by, as already described, comparing the extracted key information with the key information recorded in the RAM 331. Meanwhile, the new key information remains stored in the control circuit 330 until the electronic lock 300 is unlocked twice with the same key information, but the new key information is not used to overwrite the key information in the RAM 331.

Therefore, at the stage at which the user tries to unlock the electronic lock 300 for the second time by using the same second two-dimensional code in order to take out the baggage from the locker, a matching state is maintained between the key information included in the second two-dimensional code that can be displayed on the display 101 of the portable terminal 100 and the key information to be read out from the RAM 331 by the control circuit 330.

As a result, the user can successfully unlock the electronic lock 300 for the second time in the same manner as when unlocking the electronic lock 300 for the first time by again displaying the second two-dimensional code on the display 101 of the portable terminal 100 and reading the second two-dimensional code with the reading device 320 of the electronic lock 300.

When the electronic lock 300 is unlocked for the second time by the same key information, the new key information held in the control circuit 330 of the electronic lock 300 is transmitted to the RAM 331, and the key information is overwritten with the new key information. This corresponds to the processing of Step S1303 in the first embodiment.

## Claims

1. An electronic lock system, comprising:
a plurality of electronic locks each including:
a lock mechanism configured to be alternatively in an unlocked state or a locked state;
a lock controller having a function of executing unlocking processing of switching the lock mechanism in the locked state to the unlocked state;
a lock receiver configured to receive key information from outside, the key information being information different from information received from a previous user , the receiving of the key information acting as a trigger for the lock controller to execute the unlocking processing; and
a lock recorder configured to record the key information,
the lock controller being configured to execute the unlocking processing when the key information received by the lock receiver matches the key information recorded in the lock recorder,
each of the plurality of electronic locks having a lock identifier assigned thereto, the lock identifier being a unique identifier for distinguishing the plurality of electronic locks from each other; and
a server including:
a key information generator configured to generate the key information to be supplied to the lock controller of each of the plurality of electronic locks;
a server controller configured to control the key information generator;
a server recorder configured to record a key generated by the key information generator; and
a server communicator configured to perform wireless communication via a predetermined network,
the electronic lock system being configured to be used in combination with a portable terminal held by a user, the portable terminal including:
a terminal communicator configured to perform wireless communication to and from the server via the predetermined network;
a terminal transfer module configured to transfer the key information to the lock receiver of one of the plurality of electronic locks; and
a terminal input module for inputting the lock identifier of the one of the plurality of electronic locks,
wherein the server recorder of the server is configured to record the key information recorded at a current point in time in the lock recorder of each of the plurality of electronic locks under a state of being linked to the lock identifier of the each of the plurality of electronic locks including the lock recorder in which the key information is recorded,
wherein the server controller of the server is configured to, when a user who desires to unlock the lock mechanism of a specific electronic lock, which is one of the plurality of electronic locks, inputs the lock identifier of the specific electronic lock from the terminal input module of the portable terminal of the user and the server communicator receives the lock identifier of the specific electronic lock transmitted from the terminal communicator via the predetermined network, cause the key information generator to generate new key information, which is the key information to be recorded next in the lock recorder of the specific electronic lock, receive the generated new key information from the key information generator, read out the key information linked to the lock identifier of the specific electronic lock from the server recorder, overwrite the read key information with the new key information, and transmit the key information and the new key information from the server communicator to the portable terminal which has transmitted the lock identifier of the specific electronic lock via the predetermined network, and
wherein the lock controller of the specific electronic lock is configured to execute the unlocking processing when, of the key information and the new key information received by the terminal communicator and transferred from the portable terminal to the lock receiver via the terminal transfer module, the key information matches the key information recorded in the lock recorder, and overwrite the key information recorded in the lock recorder with the new key information.

2. The electronic lock system according to claim 1, wherein each of the plurality of electronic locks has a first two-dimensional code, which is a two-dimensional code corresponding to the lock identifier and being readable by the terminal input module of the portable terminal, arranged on or near the each of the plurality of electronic locks.

3. The electronic lock system according to claim 1 or 2,
wherein the terminal transfer module is a display configured to display a second two-dimensional code, which is a two-dimensional code including the key information and information corresponding to the new key information, and
wherein the lock receiver is a reading device configured to read the second two-dimensional code.

4. The electronic lock system according to claim 1 or 2,
wherein the terminal transfer module is configured to wirelessly transmit the key information and the new key information, and
wherein the lock receiver is configured to wirelessly receive the key information and the new key information from the terminal transfer module.

5. A method to be executed by an electronic lock system,
the electronic lock system including:
a plurality of electronic locks each including:
a lock mechanism configured to be alternatively in an unlocked state or a locked state;
a lock controller having a function of executing unlocking processing of switching the lock mechanism in the locked state to the unlocked state;
a lock receiver configured to receive key information from outside, the key information being information different from information received from a previous user, the receiving of the key information acting as a trigger for the lock controller to execute the unlocking processing; and
a lock recorder configured to record the key information,
the lock controller being configured to execute the unlocking processing when the key information received by the lock receiver matches the key information recorded in the lock recorder,
each of the plurality of electronic locks having a lock identifier assigned thereto, the lock identifier being a unique identifier for distinguishing the plurality of electronic locks from each other; and
a server including:
a key information generator configured to generate the key information to be supplied to the lock controller of each of the plurality of electronic locks;
a server controller configured to control the key information generator;
a server recorder configured to record a key generated by the key information generator; and
a server communicator configured to perform wireless communication via a predetermined network,
the electronic lock system being configured to be used in combination with a portable terminal held by a user, the portable terminal including:
a terminal communicator configured to perform wireless communication to and from the server via the predetermined network;
a terminal transfer module configured to transfer the key information to the lock receiver of one of the plurality of electronic locks; and
a terminal input module for inputting the lock identifier of the one of the plurality of electronic locks,
the method comprising the steps of:
recording, by the server recorder of the server, the key information recorded at a current point in time in the lock recorder of each of the plurality of electronic locks under a state of being linked to the lock identifier of the each of the plurality of electronic locks including the lock recorder in which the key information is recorded;
causing, by the server controller of the server, when a user who desires to unlock the lock mechanism of a specific electronic lock, which is one of the plurality of electronic locks, inputs the lock identifier of the specific electronic lock from the terminal input module of the portable terminal of the user and the server communicator receives the lock identifier of the specific electronic lock transmitted from the terminal communicator via the predetermined network, the key information generator to generate new key information, which is the key information to be recorded next in the lock recorder of the specific electronic lock, receiving the generated new key information from the key information generator, reading out the key information linked to the lock identifier of the specific electronic lock from the server recorder, overwriting the read key information with the new key information, and transmitting the key information and the new key information from the server communicator to the portable terminal which has transmitted the lock identifier of the specific electronic lock via the predetermined network; and
executing, by the lock controller of the specific electronic lock, the unlocking processing when, of the key information and the new key information received by the terminal communicator and transferred from the portable terminal to the lock receiver via the terminal transfer module, the key information matches the key information recorded in the lock recorder, and overwriting the key information recorded in the lock recorder with the new key information.

6. A computer program for causing a predetermined computer to function as a server of an electronic lock system,
the electronic lock system including:
a plurality of electronic locks each including:
a lock mechanism configured to be alternatively in an unlocked state or a locked state;
a lock controller having a function of executing unlocking processing of switching the lock mechanism in the locked state to the unlocked state;
a lock receiver configured to receive key information from outside, the key information being information different from information received from a previous user, the receiving of the key information acting as a trigger for the lock controller to execute the unlocking processing; and
a lock recorder configured to record the key information,
the lock controller being configured to execute the unlocking processing when the key information received by the lock receiver matches the key information recorded in the lock recorder,
each of the plurality of electronic locks having a lock identifier assigned thereto, the lock identifier being a unique identifier for distinguishing the plurality of electronic locks from each other; and
the server including:
a key information generator configured to generate the key information to be supplied to the lock controller of each of the plurality of electronic locks;
a server controller configured to control the key information generator;
a server recorder configured to record a key generated by the key information generator; and
a server communicator configured to perform wireless communication via a predetermined network,
the electronic lock system being configured to be used in combination with a portable terminal held by a user, the portable terminal including:
a terminal communicator configured to perform wireless communication to and from the server via the predetermined network;
a terminal transfer module configured to transfer the key information to the lock receiver of one of the plurality of electronic locks; and
a terminal input module for inputting the lock identifier of the one of the plurality of electronic locks,
the computer program being a computer program for causing the server to execute the steps of:
recording, by the server recorder of the server, the key information recorded at a current point in time in the lock recorder of each of the plurality of electronic locks under a state of being linked to the lock identifier of the each of the plurality of electronic locks including the lock recorder in which the key information is recorded; and
causing, by the server controller of the server, when a user who desires to unlock the lock mechanism of a specific electronic lock, which is one of the plurality of electronic locks, inputs the lock identifier of the specific electronic lock from the terminal input module of the portable terminal of the user and the server communicator receives the lock identifier of the specific electronic lock transmitted from the terminal communicator via the predetermined network, the key information generator to generate new key information, which is the key information to be recorded next in the lock recorder of the specific electronic lock, receiving the generated new key information from the key information generator, reading out the key information linked to the lock identifier of the specific electronic lock from the server recorder, overwriting the read key information with the new key information, and transmitting the key information and the new key information from the server communicator to the portable terminal which has transmitted the lock identifier of the specific electronic lock via the predetermined network,
the lock controller of the specific electronic lock being configured to, after the server executes the step of transmitting the key information and the new key information from the server communicator to the portable terminal which has transmitted the lock identifier of the specific electronic lock via the predetermined network, execute the unlocking processing when, of the key information and the new key information received by the terminal communicator and transferred from the portable terminal to the lock receiver via the terminal transfer module, the key information matches the key information recorded in the lock recorder, and overwrite the key information recorded in the lock recorder with the new key information.

7. A portable terminal to be held by a user, the portable terminal being configured to be used in combination with an electronic lock system,
the electronic lock system including:
a plurality of electronic locks each including:
a lock mechanism configured to be alternatively in an unlocked state or a locked state;
a lock controller having a function of executing unlocking processing of switching the lock mechanism in the locked state to the unlocked state;
a lock receiver configured to receive key information from outside, the key information being information different from information received from a previous user, the receiving of the key information acting as a trigger for the lock controller to execute the unlocking processing; and
a lock recorder configured to record the key information,
the lock controller being configured to execute the unlocking processing when the key information received by the lock receiver matches the key information recorded in the lock recorder,
each of the plurality of electronic locks having a lock identifier assigned thereto, the lock identifier being a unique identifier for distinguishing the plurality of electronic locks from each other; and
a server including:
a key information generator configured to generate the key information to be supplied to the lock controller of each of the plurality of electronic locks;
a server controller configured to control the key information generator;
a server recorder configured to record a key generated by the key information generator; and
a server communicator configured to perform wireless communication via a predetermined network,
the portable terminal comprising:
a terminal communicator configured to perform wireless communication to and from the server via the predetermined network;
a terminal transfer module configured to transfer the key information to the lock receiver of one of the plurality of electronic locks; and
a terminal input module for inputting the lock identifier of the one of the plurality of electronic locks,
wherein the server recorder of the server is configured to record the key information recorded at a current point in time in the lock recorder of each of the plurality of electronic locks under a state of being linked to the lock identifier of the each of the plurality of electronic locks including the lock recorder in which the key information is recorded,
wherein the terminal input module is configured to receive input of the lock identifier of a specific electronic lock, which is one of the plurality of electronic locks, by an operation of the user who desires to unlock the lock mechanism of the specific electronic lock,
wherein the terminal communicator is configured to transmit the lock identifier input from the terminal input module to the server via the predetermined network,
wherein the server controller of the server is configured to, when the server communicator receives the lock identifier of the specific electronic lock transmitted from the terminal communicator, cause the key information generator to generate new key information, which is the key information to be recorded next in the lock recorder of the specific electronic lock, receive the generated new key information from the key information generator, read out the key information linked to the lock identifier of the specific electronic lock from the server recorder, overwrite the read key information with the new key information, and transmit the key information and the new key information from the server communicator to the portable terminal which has transmitted the lock identifier of the specific electronic lock via the predetermined network,
wherein the terminal communicator is configured to receive the key information and the new key information from the server communicator,
wherein the terminal transfer module is configured to transfer the key information and the new key information received by the terminal communicator to the lock receiver of the specific electronic lock, and
wherein the lock controller of the specific electronic lock is configured to execute the unlocking processing when, of the key information and the new key information transferred from the portable terminal to the lock receiver, the key information matches the key information recorded in the lock recorder, and overwrite the key information recorded in the lock recorder with the new key information.

8. A method to be executed by the portable terminal of claim 7, the method comprising the steps of:
(A) receiving, by the terminal input module, input of the lock identifier of a specific electronic lock, which is one of the plurality of electronic locks, by an operation of the user who desires to unlock the lock mechanism of the specific electronic lock;
(B) transmitting, by the terminal communicator, the lock identifier input from the terminal input module to the server via the predetermined network;
(C) receiving, by the terminal communicator, the key information and the new key information from the server communicator; and
(D) transferring, by the terminal transfer module, the key information and the new key information received by the terminal communicator to the lock receiver of the specific electronic lock.

9. A computer program for causing a predetermined portable terminal to function as the portable terminal of claim 7, the computer program being a computer program for causing the predetermined portable terminal to execute a method, the method including the steps of:
(A) receiving, by the terminal input module, input of the lock identifier of a specific electronic lock, which is one of the plurality of electronic locks, by an operation of the user who desires to unlock the lock mechanism of the specific electronic lock;
(B) transmitting, by the terminal communicator, the lock identifier input from the terminal input module to the server via the predetermined network;
(C) receiving, by the terminal communicator, the key information and the new key information from the server communicator; and
(D) transferring, by the terminal transfer module, the key information and the new key information received by the terminal communicator to the lock receiver of the specific electronic lock.
